(19) Europäisches Patentamt
European Patent Office
Office européen des brevets

(11) EP 3 575 341 B1

(12) **EUROPEAN PATENT SPECIFICATION**

(45) Date of publication and mention of the grant of the patent:
**28.10.2020 Bulletin 2020/44**

(21) Application number: **19177609.5**

(22) Date of filing: **31.05.2019**

(51) Int Cl.:
***C08G 64/18*** (2006.01) ***C08G 64/42*** (2006.01)
***C08G 64/30*** (2006.01) ***C08L 69/00*** (2006.01)
***C09D 169/00*** (2006.01) ***C09J 169/00*** (2006.01)
***C09D 11/104*** (2014.01)

(54) **POLYCARBONATE DIOL COMPOSITION**

POLYCARBONATDIOLZUSAMMENSETZUNG

COMPOSITION DE POLYCARBONATE DIOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2018 JP 2018104851**

(43) Date of publication of application:
**04.12.2019 Bulletin 2019/49**

(73) Proprietor: **ASAHI KASEI KABUSHIKI KAISHA**
**Tokyo 100-0006 (JP)**

(72) Inventor: **KAWAI, Yasufumi**
**Tokyo, 100-0006 (JP)**

(74) Representative: **Strehl Schübel-Hopf & Partner**
**Maximilianstrasse 54**
**80538 München (DE)**

(56) References cited:
**EP-A1- 3 141 574** **US-A- 5 703 196**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 575 341 B1

## Description

### BACKGROUND OF THE INVENTION

#### Field of the Invention

The present invention relates to a polycarbonate diol composition, and a coating material composition, an ink composition, and a viscous adhesive composition comprising the same.

#### Description of the Related Art

Polyurethane resins have heretofore been used in a wide range of fields such as synthetic leather, artificial leather, adhesives, coating materials for furniture, and coating materials for automobiles. Polyether, polyester, and polycarbonate are used as polyol components to be reacted with isocyanate. However, in recent years, there has been a growing demand for the resistance, such as heat resistance, weather resistance, hydrolysis resistance, solvent resistance, sunscreen resistance, or scratch resistance, of polyurethane resins.

In general, a polyurethane resin obtained using polycarbonate diol as a polyol component is known to be superior in scratch resistance to a polyurethane resin obtained using polyether or polyester. For example, Japanese Patent Laid-Open No. 2-289616 discloses a coating material composition obtained using polycarbonate diol as a polyol component. For example, Japanese Patent Laid-Open No. 2006-124486 discloses a polycarbonate diol/polyether block copolymer.

The polyurethane resins obtained using polycarbonate diol, described in Japanese Patent Laid-Open Nos. 2-289616 and 2006-124486 are still susceptible to improvement in the stain resistance of coating materials for furniture and the like or for purposes such as coating materials for automobiles required to have strict physical properties such as chemical resistance.

Accordingly, an object of the present invention is to provide a polycarbonate diol composition capable of forming a coating film excellent in stain resistance and chemical resistance. EP 3 141 574 A1 discloses a polycarbonate/polyoxyethylene block copolymer for an aqueous composition.

### SUMMARY OF THE INVENTION

The present inventor has conducted diligent studies to attain the object and consequently completed the present invention by gaining the findings that a polycarbonate diol composition having a specific structure exerts excellent physical properties.

The present invention can provide a polycarbonate diol composition excellent in stain resistance and chemical resistance.

### DETAILED DESCRIPTION OF THE PREFERRED EMBODIMENTS

Hereinafter, the mode for carrying out the present invention (hereinafter, referred to as the "present embodiment") will be described in detail.

The polycarbonate diol composition according to the present embodiment is a polycarbonate diol composition comprising a polyoxyethylene structure represented by (formula 1) and a polycarbonate structure represented by (formula 2), the polycarbonate diol composition having hydroxy groups at both ends and having a number-average molecular weight of 300 or larger and 10000 or smaller, wherein the polycarbonate diol composition comprises 5% by mass or more and 50% by mass or less of the polyoxyethylene structure and 50% by mass or more and 95% by mass or less of the polycarbonate structure based on a total mass of the polyoxyethylene structure and the polycarbonate structure, and among dihydroxy compounds obtained by a hydrolysis of the polycarbonate diol composition, a dihydroxy compound except for a dihydroxy compound having a polyoxyethylene structure comprises at least one kind of compound selected from the group consisting of dihydroxy compounds represented by (formula 3) :

$$-\left(CH_2-CH_2-O\right)_m- \quad \text{... (Formula 1)}$$

wherein m is a number of 3 or larger and 70 or smaller,

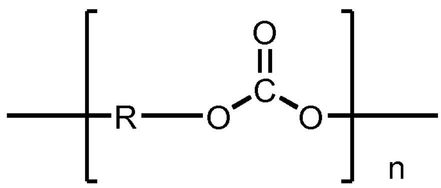

(Formula 2)

wherein R is a divalent linear, branched or cyclic aliphatic, or aromatic hydrocarbon group having 2 or more and 15 or less carbon atoms, and a plurality of R moieties are the same as or different from each other; and n is a number of 1 or larger and 50 or smaller, and

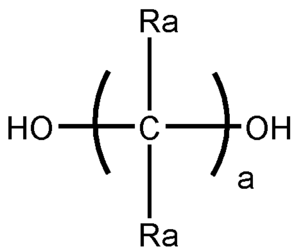

... (Formula 3)

wherein Ra is a hydrogen group or an aliphatic hydrocarbon group having 1 to 5 carbon atoms, and Ra moieties are the same or different; and a is a number of 2 or larger and 4 or smaller.

The content of the polyoxyethylene structure represented by (formula 1) and the content of the polycarbonate structure represented by (formula 2) in the polycarbonate diol composition can be measured by, for example, the following procedures (1) to (4).

(1) The polycarbonate diol composition is alkali-hydrolyzed in an ethanolic potassium hydroxide solution to regenerate a diol component.
(2) Phenolphthalein is used as an indicator, and the mixture is neutralized by the addition of hydrochloric acid.
(3) A deposited salt is filtered off, and the filtrate is measured by GPC.
(4) The concentration of diol having hydroxy groups at both ends of the polyoxyethylene structure represented by (formula 1) in the filtrate is determined from a separately prepared calibration curve. The mass of the diol having hydroxy groups at both ends of the polyoxyethylene structure represented by (formula 1) is calculated from the concentration and divided by the mass of the polycarbonate diol composition used in the alkali hydrolysis. The obtained value is the content of the diol having hydroxy groups at both ends of the polyoxyethylene structure represented by (formula 1).

The average number of carbon atoms of the dihydroxy compound except for the dihydroxy compound having the polyoxyethylene structure among the dihydroxy compounds obtained by the hydrolysis of the polycarbonate diol composition according to the present embodiment can be determined from results of analyzing, by gas chromatography, the dihydroxy compounds obtained by the hydrolysis of the polycarbonate diol composition under heating in the presence of an alkali. Specifically, the average number of carbon atoms of the dihydroxy compound except for the dihydroxy compound having the polyoxyethylene structure among the dihydroxy compounds obtained by the hydrolysis of the polycarbonate diol composition is calculated from the number of carbon atoms of the dihydroxy compound except therefor, and the molar ratio of this dihydroxy compound to all dihydroxy compounds except for the dihydroxy compound having the polyoxyethylene structure.

The terminal structure of the polyoxyethylene structure represented by (formula 1) in the polycarbonate diol composition is a terminal structure where one of the ends is bonded to a carbonate group (-O-CO-O-), and the other end is bonded to a hydroxy group (-OH), a terminal structure where both ends are bonded to carbonate groups (-O-CO-O-), or a terminal structure where both ends are bonded to hydroxy groups (-OH).

A molecule having the polyoxyethylene structure represented by (formula 1) in the polycarbonate diol composition has hydroxy groups at both ends.

The molecule having the polycarbonate structure contained in the polycarbonate diol composition has hydroxy groups at both ends thereof. Specifically, the molecule having the polycarbonate structure contained in the polycarbonate diol composition is polycarbonate diol. A portion of the terminal hydroxy groups may be converted to an alkyl group, an aryl group or the like unreactive with an isocyanate group due to impurities in various starting materials for use in the

production of the polycarbonate diol composition, a terminal structure that is secondarily produced during the production of the polycarbonate diol composition, etc., or in order to control a urethanization reaction rate or state for the purpose of using the polycarbonate diol composition. In the present embodiment, in consideration of such a case, the terminal groups of the polycarbonate diol also encompass the case where 100% by mol of groups at both ends is not strictly a hydroxy group. From such a viewpoint, the ratio of the hydroxy groups to the total molar quantity of terminal groups is preferably 90% by mol or more, more preferably 95% by mol or more.

The structures at both ends of the polycarbonate diol contained in the polycarbonate diol composition can be confirmed in accordance with, for example, a method for measuring a terminal hydroxy group concentration, described in Japanese Patent No. 3874664 (Reference 1).

Ethanol as well as a solvent such as tetrahydrofuran, acetone, or methanol can be used as a solvent recovering fractions.

The number-average molecular weight of the polycarbonate diol composition of the present embodiment is 300 or larger and 10000 or smaller, more preferably 400 or larger and 10000 or smaller, further preferably 500 or larger and 3000 or smaller.

When the number-average molecular weight is equal to or larger than the lower limit value described above, thermoplastic urethane obtained from the polycarbonate diol composition tends to have better flexibility and low-temperature characteristics. On the other hand, when the number-average molecular weight is equal to or smaller than the upper limit value described above, thermoplastic urethane obtained from the polycarbonate diol composition tends to have better molding processability.

The number-average molecular weight of the polycarbonate diol composition can be calculated from the hydroxy value of the polycarbonate diol composition by use of a method described in Examples mentioned later.

[Polyoxyethylene structure represented by (formula 1)]

In the polycarbonate diol composition of the present embodiment, the content of the polyoxyethylene structure represented by (formula 1) is 5% by mass or more and 50% by mass or less, more preferably 5% by mass or more and 30% by mass or less, further preferably 5% by mass or more and 20% by mass or less, based on the total mass of the polyoxyethylene structure represented by (formula 1) and the polycarbonate structure represented by (formula 2) .

When the content of the polyoxyethylene structure represented by (formula 1) is equal to or more than the lower limit value described above, the polycarbonate diol composition of the present embodiment is much superior in stain resistance and chemical resistance. When the content of the polyoxyethylene structure represented by (formula 1) is equal to or less than the upper limit value described above, the polycarbonate diol composition of the present embodiment is more prevented from being thermally decomposed.

In the polycarbonate diol composition of the present embodiment, the polyoxyethylene structure represented by (formula 1) has a terminal structure where one of the ends is bonded to a carbonate group, and the other end is bonded to a hydroxy group, a terminal structure where both ends are bonded to carbonate groups, or a terminal structure where both ends are bonded to hydroxy groups.

In the polycarbonate diol composition of the present embodiment, the polyoxyethylene structure represented by (formula 1) may have a mixture of a terminal structure where one of the ends is bonded to a carbonate group, and the other end is bonded to a hydroxy group, a terminal structure where both ends are bonded to carbonate groups, and a terminal structure where both ends are bonded to hydroxy groups.

Subsequently, the details of the polyoxyethylene structure represented by (formula 1) will be described below.

In (formula 1), m represents the number of repeats of the structure ($-CH_2-CH_2-O-$). m is a number of 3 or larger and 70 or smaller, preferably a number of 11 or larger and 60 or smaller, more preferably a number of 17 or larger and 50 or smaller.

When m is equal to or larger than the lower limit value described above, a coating film obtained using the polycarbonate diol composition tends to have better water resistance and heat resistance because the amount of the starting material diol used having hydroxy groups at both ends of the polyoxyethylene structure represented by (formula 1) can be reduced. When m is equal to or smaller than the upper limit value described above, the crystallinity of the polycarbonate diol composition tends to be further suppressed.

m described above can be determined by isolating the starting material diol component through the alkali decomposition of the polycarbonate diol composition, and subjecting the component to GC-MS measurement, LC-MS measurement and gel permeation chromatography (GPC) measurement.

[Polycarbonate structure represented by (formula 2)]

In the polycarbonate diol composition of the present embodiment, the content of the polycarbonate structure represented by (formula 2) is 50% by mass or more and 95% by mass or less, more preferably 70% by mass or more

and 95% by mass or less, further preferably 80% by mass or more and 95% by mass or less, based on the total mass of the polyoxyethylene structure represented by (formula 1) and the polycarbonate structure represented by (formula 2).

When the content of the polycarbonate structure represented by (formula 2) is equal to or more than the lower limit value described above, the polycarbonate diol composition of the present embodiment is much superior in compatibility with polyether polyol. When the content of the polycarbonate structure represented by (formula 2) is equal to or less than the upper limit value described above, the polycarbonate diol composition of the present embodiment is much superior in water resistance, heat resistance, chemical resistance, abrasion resistance, etc.

Subsequently, the details of the polycarbonate structure represented by (formula 2) will be described below.

In the polycarbonate structure represented by (formula 2), R is a divalent linear, branched or cyclic aliphatic, or aromatic hydrocarbon group having 2 or more and 15 or less carbon atoms. A plurality of R moieties are the same as or different from each other. Among others, a plurality of R moieties are preferably the same as each other because of easy synthesis.

The divalent linear aliphatic hydrocarbon group represented by R has 2 or more and 15 or less, preferably 2 or more and 10 or less, more preferably 2 or more and 6 or less carbon atoms.

Specific examples of the divalent linear aliphatic hydrocarbon group represented by R include, but are not particularly limited to, an ethylene group, a trimethylene group, a tetramethylene group, a pentamethylene group, a hexamethylene group, a heptylene group, and an octylene group. Among others, a trimethylene group, a butylene group, a pentylene group or a hexylene group is preferred from the viewpoint of versatility.

The divalent branched aliphatic hydrocarbon group represented by R has 3 or more and 15 or less, preferably 3 or more and 12 or less, more preferably 3 or more and 10 or less carbon atoms.

Specific examples of the divalent branched aliphatic hydrocarbon group represented by R include, but are not particularly limited to, an isopropylene group, an isobutylene group, a tert-butylene group, an isopentylene group, a 2,2-dimethyltrimethylene group, an isohexylene group, an isoheptylene group, and an isooctylene group. Among others, an isopentylene group or an isohexylene group is preferred from the viewpoint of versatility.

The divalent cyclic aliphatic hydrocarbon group represented by R has 3 or more and 15 or less, preferably 6 or more and 15 or less, more preferably 6 or more and 10 or less carbon atoms.

Specific examples of the divalent cyclic aliphatic hydrocarbon group represented by R include, but are not particularly limited to, a cyclobutylene group, a cyclopentylene group, a cyclohexylene group, and a cycloheptylene group. Among others, a cyclopentylene group or a cyclohexylene group is preferred from the viewpoint of versatility.

The divalent aromatic hydrocarbon group represented by R has 6 or more and 15 or less, preferably 6 or more and 12 or less, more preferably 6 or more and 10 or less carbon atoms.

Specific examples of the divalent aromatic hydrocarbon group represented by R include, but are not particularly limited to, a phenylene group and a naphthylene group.

Among others, R is preferably a divalent linear aliphatic hydrocarbon group having 2 or more and 10 or less carbon atoms, or a divalent branched aliphatic hydrocarbon group having 3 or more and 10 or less carbon atoms, more preferably a divalent linear aliphatic hydrocarbon group having 3 or more and 10 or less carbon atoms.

In the polycarbonate structure represented by (formula 2), n represents the number of repeats of the carbonate structure (-R-O-CO-O-). n is a number of 1 or larger and 50 or smaller, preferably a number of 2 or larger and 50 or smaller, more preferably a number of 3 or larger and 40 or smaller, further preferably a number of 4 or larger and 30 or smaller.

n can be determined by isolating the starting material diol component through the alkali decomposition of the polycarbonate diol composition, and subjecting the component to GC-MS measurement, LC-MS measurement and GPC measurement.

[Dihydroxy compound obtained by hydrolysis]

The polycarbonate diol composition of the present embodiment comprises at least one kind of compound selected from the group consisting of dihydroxy compounds represented by (formula 3) (hereinafter, also simply referred to as a "dihydroxy compound represented by (formula 3)") as a dihydroxy compound except for a dihydroxy compound having a polyoxyethylene structure among dihydroxy compounds obtained by hydrolysis:

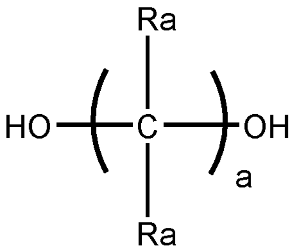

... (Formula 3)

wherein Ra is a hydrogen group, or an aliphatic hydrocarbon group having 1 to 5 carbon atoms, and Ra moieties are the same or different; and a is a number of 2 or larger and 4 or smaller.

The polycarbonate diol composition of the present embodiment can be configured so as to comprise the dihydroxy compound represented by (formula 3) among the dihydroxy compounds obtained by hydrolysis, thereby forming a coating film excellent in stain resistance and chemical resistance.

The content of the dihydroxy compound represented by (formula 3) in the dihydroxy compound except for the dihydroxy compound having the polyoxyethylene structure among the dihydroxy compounds obtained by the hydrolysis of the polycarbonate diol composition of the present embodiment is preferably 10% by mol or more, more preferably 30% by mol or more, further preferably 50% by mol or more. The upper limit of the content of the dihydroxy compound represented by (formula 3) is not particularly limited and is, for example, 100% by mol.

When the content of the dihydroxy compound represented by (formula 3) in the dihydroxy compound except for the dihydroxy compound having the polyoxyethylene structure among the dihydroxy compounds obtained by hydrolysis falls within the range described above, the polycarbonate diol composition of the present embodiment can form a coating film much superior in stain resistance and chemical resistance.

In (formula 3), Ra is preferably a hydrogen group or has 1 to 3 carbon atoms, more preferably a hydrogen group or has 1 or 2 carbon atoms. In (formula 3), a is preferably 2 to 4, more preferably 3 to 4.

The structure of (formula 3) is preferably represented by the following (formula 3-1):

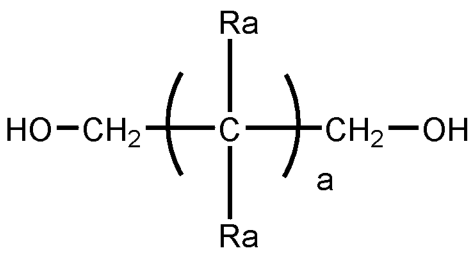

(Formula 3-1)

wherein Ra is a hydrogen group, or an aliphatic hydrocarbon group having 1 to 5 carbon atoms, and Ra moieties are the same or different; and a is a number of 0 or larger and 2 or smaller.

Specific examples of the dihydroxy compound represented by (formula 3) include, but are not particularly limited to, ethylene glycol, 1,3-propanediol, 1,4-butanediol, 2-methyl-1,3-propanediol, and 2,2-methyl-1,3-propanediol.

The average number of carbon atoms of the dihydroxy compound except for the dihydroxy compound having the polyoxyethylene structure among the dihydroxy compounds obtained by the hydrolysis of the polycarbonate diol composition of the present embodiment is preferably 2 or more and less than 5.5, more preferably 2 to 5, further preferably 2 to 4.8. When the average number of carbon atoms of the dihydroxy compound falls within the range described above, the polycarbonate diol composition can form a coating film much superior in stain resistance and chemical resistance.

Examples of the method for obtaining the polycarbonate diol composition comprising the dihydroxy compound represented by (formula 3) by hydrolysis include, but are not particularly limited to, a method of reacting a carbonate compound, diol comprising the dihydroxy compound represented by (formula 3), and polyethylene glycol in the presence of a transesterification catalyst.

[Polycarbonate diol composition]

The number-average molecular weight of the polycarbonate diol composition according to the present embodiment is 300 or larger and 10000 or smaller, more preferably 400 or larger and 10000 or smaller, further preferably 500 or larger and 3000 or smaller. When the number-average molecular weight is 300 or larger, thermoplastic urethane obtained from the polycarbonate diol composition tends to have better flexibility and low-temperature characteristics.

When the number-average molecular weight is 10000 or smaller, thermoplastic urethane obtained from the polycarbonate diol composition tends to have better molding processability. The number-average molecular weight of the polycarbonate diol composition can be calculated from the hydroxy value of the polycarbonate diol composition, as in a method described in Examples mentioned later.

The polycarbonate diol composition according to the present embodiment can be obtained, for example, through transesterification reaction using polyoxyethylene diol represented by the following (formula a) and polycarbonate diol represented by the following (formula b) :

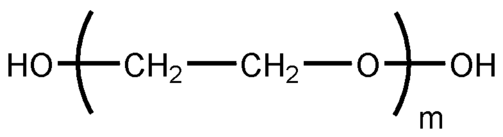

(Formula a)

wherein m is a number of 3 to 70, and

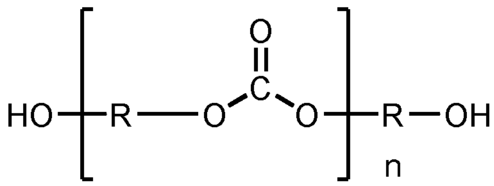

(Formula b)

wherein R is a divalent linear, branched or cyclic aliphatic, or aromatic hydrocarbon group having 2 or more and 15 or less carbon atoms, and a plurality of R moieties are the same as or different from each other; n is a number of 1 or larger and 50 or smaller.

m in (formula a) is as defined in m in (formula 1) described above. R and n in (formula b) are as defined in R and n, respectively, in (formula 2). Hereinafter, the polyoxyethylene diol represented by (formula a) and the polycarbonate diol represented by (formula b) will be described.

(Polyoxyethylene diol)

The polyoxyethylene diol for use in the production of the polycarbonate diol composition of the present embodiment can be any compound having the structure represented by (formula a) and is not particularly limited. Products having various molecular weights are commercially available as the polyoxyethylene diol, and such a commercially available product may be used. Examples of the commercially available product of the polyoxyethylene diol include, but are not particularly limited to, "polyethylene glycol" series manufactured by Wako Pure Chemical Industries, Ltd.

The number-average molecular weight of the polyoxyethylene diol is not particularly limited and is preferably 400 to 2000, more preferably 600 to 1500. Use of polyoxyethylene glycol having a number-average molecular weight of 400 or larger can reduce the amount of the starting material polyoxyethylene glycol used. The resulting polycarbonate diol composition tends to have much better water resistance and heat resistance. Use of polyoxyethylene glycol having a number-average molecular weight of 2000 or smaller tends to suppress the crystallinity of the resulting polycarbonate diol composition.

The polycarbonate diol for use in the production of the polycarbonate diol composition of the present embodiment can be any compound having the structure represented by (formula b) and is not particularly limited. A method for producing this polycarbonate diol is not particularly limited, and a method known in the art may be adopted. The polycarbonate diol can be obtained, for example, through the reaction of a carbonate compound such as alkylene carbonate, dialkyl carbonate, or diaryl carbonate with a diol compound in the presence of a transesterification catalyst.

(Carbonate compound)

Examples of the carbonate compound for use in the production of the polycarbonate diol include, but are not limited to, alkylene carbonate, dialkyl carbonate, and diaryl carbonate.

Examples of the alkylene carbonate include, but are not particularly limited to, ethylene carbonate, trimethylene carbonate, 1,2-propylene carbonate, 1,2-butylene carbonate, 1,3-butylene carbonate, and 1,2-pentylene carbonate.

Examples of the dialkyl carbonate include, but are not particularly limited to, dimethyl carbonate, diethyl carbonate, dipropyl carbonate, and dibutyl carbonate.

Examples of the diaryl carbonate include, but are not particularly limited to, diphenyl carbonate.
Among others, the carbonate compound for use in the production of the polycarbonate diol is preferably alkylene carbonate, more preferably ethylene carbonate.

(Diol compound)

Examples of the diol compound for use in the production of the polycarbonate diol include, but are not limited to, linear diol, branched diol, cyclic diol, and diol having an aromatic ring.
Examples of the linear diol include, but are not particularly limited to, ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, and 1,12-dodecanediol.
Examples of the branched diol include, but are not particularly limited to, 2-methyl-1,8-octanediol, neopentyl glycol, 2-ethyl-1,6-hexanediol, 2-methyl-1,3-propanediol, 3-methyl-1,5-pentanediol, 2,4-dimethyl-1,5-pentanediol, and 2,4-diethyl-1,5-pentanediol.
Examples of the cyclic diol include, but are not particularly limited to, 1,3-cyclohexanediol, 1,4-cyclohexanediol, 1,4-cyclohexanedimethanol, and 2-bis(4-hydroxycyclohexyl)-propane.
Examples of the diol having an aromatic ring include, but are not particularly limited to, p-xylenediol, p-tetrachloroxylenediol, 1,4-bis(hydroxyethoxy)benzene, 2,2-bis[(4-hydroxyethoxy)phenyl]propane.
Among others, 1,3-propanediol, 2-methyl-1,3-propanediol, 1,4-butanediol, 1,5-pentanediol or 1,6-hexanediol is more preferred.

[Production conditions for polycarbonate diol composition and polycarbonate diol]

For the production of the starting material polycarbonate diol represented by (formula b), a transesterification reaction catalyst can be used.
Examples of the transesterification reaction catalyst include, but are not particularly limited to, alkali metals and alkaline earth metals, and alcoholates thereof, hydrides thereof, oxides thereof, amides thereof, hydroxides thereof and salts thereof.
Examples of the salts of the alkali metal and the alkaline earth metal include, but are not particularly limited to, carbonate, nitrogen-containing borate, and basic salts with organic acids.
Examples of the alkali metal include, but are not particularly limited to, lithium, sodium, and potassium.
Examples of the alkaline earth metal include, but are not particularly limited to, magnesium, calcium, strontium, and barium.
Examples of the transesterification catalyst using a metal other than alkali metals and alkaline earth metals include, but are not particularly limited to, metals other than alkali metals and alkaline earth metals, and salts thereof, alcoholates thereof, and organic compounds containing the metals.
Specific examples of the metal other than alkali metals and alkaline earth metals include, but are not particularly limited to, aluminum, titanium, vanadium, chromium, manganese, iron, cobalt, nickel, copper, zinc, gallium, germanium, zirconium, niobium, molybdenum, ruthenium, rhodium, palladium, silver, indium, tin, antimony, tungsten, rhenium, osmium, iridium, platinum, gold, thallium, lead, bismuth, and ytterbium.
One of these transesterification catalysts can be used alone, or two or more thereof can be used in combination.
Among others, the transesterification reaction catalyst is preferably at least one metal selected from the group consisting of sodium, potassium, magnesium, titanium, zirconium, tin, lead and ytterbium, or a salt thereof, an alkoxide thereof, or an organic compound containing the metal, because transesterification reaction to obtain the polycarbonate diol is more favorably performed, and use of the resulting polycarbonate diol has less influence on urethane reaction.
The transesterification reaction catalyst is more preferably at least one metal selected from the group consisting of magnesium, titanium, ytterbium, tin and zirconium.
Specific examples of the preferred transesterification catalyst include, but are not particularly limited to, organic compounds of lead and organic compounds of titanium.
Examples of the organic compound of lead include, but are not particularly limited to, lead acetate trihydrate, tetraphenyl lead, and lead stearate.
Examples of the organic compound of titanium include, but are not particularly limited to, titanium tetra-n-butoxide, titanium tetra-n-propoxide, and titanium tetraisopropoxide.
The amount of the transesterification reaction catalyst used is preferably 0.00001% by mass or more and 0.1% by mass or less, more preferably 0.0001% by mass or more and 0.05% by mass or less, based on a total mass of the starting materials.
The transesterification catalyst used in transesterification reaction is not consumed by the transesterification reaction when heat treatment is performed subsequently to the production of the polycarbonate diol. Therefore, its

amount can be calculated on the basis of the amount of the transesterification reaction catalyst used. In the case of using, for example, commercially available polycarbonate diol, the amount of a metal of the transesterification reaction catalyst contained in the polycarbonate diol is determined by ICP (inductively coupled plasma) measurement.

The polycarbonate diol represented by (formula b) for use in the production of the polycarbonate diol composition of the present embodiment may be supplemented with a catalyst poison such as a phosphoric acid ester compound in order to deactivate the transesterification reaction catalyst used in the production thereof.

When the starting material polycarbonate diol represented by (formula b) contains a catalyst poison for the transesterification reaction catalyst, etc. used in the production thereof, the transesterification reaction of the polyoxyethylene diol represented by (formula a) with the polycarbonate diol represented by (formula b) usually tends to be less likely to progress. Hence, for the production of the polycarbonate diol composition, the transesterification reaction catalyst described above can be newly added in a necessary amount.

On the other hand, when the starting material polycarbonate diol represented by (formula b) contains no catalyst poison for the transesterification reaction catalyst, the transesterification reaction usually tends to be more likely to progress. However, in the case of, for example, further lowering a reaction temperature or further shortening a reaction time in the process of producing the polycarbonate diol composition of the present embodiment, the transesterification reaction catalyst can also be newly added in a necessary amount. In this case, the same transesterification reaction catalyst as that used in the production of the starting material polycarbonate diol represented by (formula b) can be adopted.

The polycarbonate diol represented by (formula b) for use in the production of the polycarbonate diol composition of the present embodiment may be homo polycarbonate diol obtained from one diol compound, or may be a copolymeric polycarbonate diol obtained from two or more diol compounds.

Use of any of the above-listed polycarbonate diols represented by (formula b) can produce the polycarbonate diol composition through transesterification reaction with the polyoxyethylene diol represented by (formula a).

However, for example, homo polycarbonate diol obtained using 1,6-hexanediol, which is widely used on the market, is usually a solid at ordinary temperature. Hence, a polycarbonate diol composition obtained through the transesterification reaction of the homo polycarbonate diol with the polyoxyethylene diol represented by (formula a) tends to be also a solid at ordinary temperature.

On the other hand, for example, copolymeric polycarbonate diol obtained using two types, 1,5-pentanediol and 1,6-hexanediol, is a liquid at ordinary temperature. Hence, a polycarbonate diol composition obtained through the transesterification reaction of the copolymeric polycarbonate diol with the polyoxyethylene diol represented by (formula a) tends to be also a liquid at ordinary temperature.

Accordingly, the starting material polycarbonate diol is often preferably a liquid at ordinary temperature from the viewpoint of handleability

The number-average molecular weight of the polycarbonate diol represented by (formula b) for use in the production of the polycarbonate diol composition of the present embodiment is not particularly limited and is preferably 500 or larger and 5000 or smaller, more preferably 1000 or larger and 3000 or smaller.

When the number-average molecular weight of the polycarbonate diol represented by (formula b) is equal to or larger than the lower limit value described above, performance expected for the polycarbonate diol tends to be better. On the other hand, when the number-average molecular weight of the polycarbonate diol represented by (formula b) is equal to or smaller than the upper limit value described above, the polycarbonate diol composition can be more effectively prevented from having a higher viscosity. Thus, handleability tends to be better.

The polycarbonate diol composition of the present embodiment may be produced through the polycondensation reaction of the polyoxyethylene diol represented by (formula a) for use as diol, the polyoxyethylene diol represented by (formula a), and the carbonate compound. However, for the progression of such polycondensation reaction of the polycarbonate diol, it is usually preferred to heat the reaction mixture at a high temperature for a long time. This may increase the possibility of causing undesirable side reaction or may increase workload in the shift of the type of products.

From such a viewpoint, the method for producing the polycarbonate diol composition of the present embodiment is preferably production through transesterification reaction using the polyoxyethylene diol represented by (formula a) and the polycarbonate diol represented by (formula b) without the use of polycondensation reaction using the polyoxyethylene diol represented by (formula a) and the carbonate compound.

Specifically, the transesterification reaction can be carried out by mixing the polyoxyethylene diol represented by (formula a) with the polycarbonate diol represented by (formula b), and stirring the mixture under heating.

The temperature of the transesterification reaction is not particularly limited and is preferably 120°C or higher and 200°C or lower, more preferably 140°C or higher and 180°C or lower.

When the reaction temperature is equal to or higher than the lower limit value described above, the transesterification reaction can be performed in a shorter time, leading to excellent cost efficiency. When the reaction temperature is equal to or lower than the upper limit value described above, the resulting polycarbonate diol composition can be more effectively prevented from being stained.

The reaction pressure of the transesterification reaction is not particularly limited and is preferably atmospheric pressure or higher and 1 MPa or lower. When the reaction pressure falls within the range described above, the reaction can be more conveniently carried out. In the case of using an auxiliary material, the transesterification reaction can be more efficiently accelerated at a pressure increased to some extent in consideration of vapor pressure thereof, etc.
The method for controlling the number-average molecular weight of the polycarbonate diol composition preferably involves, for example, selecting the starting material polycarbonate diol represented by (formula b) as one having an appropriate molecular weight, or performing the transesterification reaction in the presence of one type or two or more types of polyoxyethylene diols represented by (formula a) from the viewpoint of molecular weight adjustment.
The progression and completion of the transesterification reaction can be confirmed by GPC measurement. As the transesterification reaction progresses, a peak derived from the starting material polyoxyethylene diol represented by (formula a) is decreased in height or area over time. From the disappearance of the peak, it can be confirmed that a structure derived from the polyoxyethylene diol represented by (formula a) is bonded to the end or inside the polymer chain of the starting material polycarbonate diol represented by (formula b).
In the method for producing the polycarbonate diol composition of the present embodiment, for example, a step of dehydrating the starting materials used may be performed as pretreatment before the transesterification reaction described above.
In the method for producing the polycarbonate diol composition of the present embodiment, for example, a step of adding the aforementioned catalyst poison for the transesterification reaction catalyst may be performed as aftertreatment after the transesterification reaction described above.

(Polyurethane composition)

The polycarbonate diol composition of the present embodiment is excellent in stain resistance and chemical resistance and can therefore be suitably used in a polyurethane composition. The polyurethane composition of the present embodiment comprises the polycarbonate diol composition described above and can be applied to various purposes including coating materials, inks, and viscous adhesives.
The coating material composition, the ink composition or the viscous adhesive composition of the present embodiment comprises the polycarbonate diol composition described above.

(Polyol component other than polycarbonate diol composition)

The polyurethane composition of the present embodiment may comprise a polyol component other than the polycarbonate diol composition component described above.
The polyol component is not particularly limited as long as the compound has two or more hydroxy groups in the molecule. Examples thereof include polyester polyol, acrylic polyol, polyether polyol, polyolefin polyol, and fluorine polyol.
Examples of the polyester polyol include, but are not particularly limited to, polyester polyol and polycaprolactones. The polyester polyol is obtained, for example, but not particularly limited to, through the condensation reaction of a dibasic acid used alone or as a mixture with a polyhydric alcohol used alone or as a mixture. Examples of the dibasic acid include, but are not particularly limited to, a dibasic acid selected from the group consisting of carboxylic acids such as succinic acid, adipic acid, sebacic acid, dimer acid, maleic anhydride, phthalic anhydride, isophthalic acid, and terephthalic acid. Specific examples of the polyhydric alcohol include, but are not particularly limited to, a polyhydric alcohol selected from the group consisting of ethylene glycol, propylene glycol, diethylene glycol, neopentyl glycol, trimethylolpropane, and glycerin. The polycaprolactones are obtained, for example, but not particularly limited to, through the ring-opening polymerization of ε-caprolactone using a polyhydric alcohol.
Examples of the acrylic polyol include, but are not particularly limited to, a copolymer of an ethylenic unsaturated bond-containing monomer having a hydroxyl group, used alone or as a mixture, and another ethylenic unsaturated bond-containing monomer copolymerizable therewith, used alone or as a mixture.
Examples of the ethylenic unsaturated bond-containing monomer having a hydroxyl group include, but are not particularly limited to, hydroxyethyl acrylate, hydroxypropyl acrylate, hydroxybutyl acrylate, hydroxyethyl methacrylate, hydroxypropyl methacrylate, and hydroxybutyl methacrylate. Among them, hydroxyethyl acrylate or hydroxyethyl methacrylate is preferred.
Examples of the another ethylenic unsaturated bond-containing monomer copolymerizable with the ethylenic unsaturated bond-containing monomer having the hydroxyl group include, but are not particularly limited to: acrylic acid esters such as methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate, and phenyl acrylate; methacrylic acid esters such as methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate, and phenyl methacrylate; unsaturated carboxylic acids such as acrylic acid, methacrylic acid, maleic acid, and itaconic acid; unsaturated amides such as acrylamide, methacrylamide, N,N-methylenebisacrylamide, diacetone acrylamide, diacetone methacrylamide, maleic acid amide, and maleimide; vinyl monomers such as glycidyl methacrylate, styrene, vinyltoluene, vinyl acetate, acrylonitrile, and dibutyl fumarate; and vinyl monomers having a hydrolyzable silyl group, such as vinyltrimethoxysilane, vinylmethyldimethoxysilane, and $\gamma$-(meth)acryloxypropyltrimethoxysilane.

Examples of the polyether polyol include, but are not particularly limited to: polyether polyols obtained by adding alkylene oxide, such as ethylene oxide, propylene oxide, butylene oxide, cyclohexene oxide, or styrene oxide, used alone or as a mixture to a polyhydric hydroxy compound used alone or as a mixture using a strongly basic catalyst such as a hydroxide or an alcoholate of lithium, sodium, potassium, or the like, or alkylamine; polyether polyols obtained by reacting alkylene oxide with a polyfunctional compound such as ethylenediamine; and so-called polymer polyols obtained by polymerizing acrylamide or the like with the polyethers as media.

Examples of the polyhydric hydroxy compound include, but are not particularly limited to: diglycerin, ditrimethylolpropane, pentaerythritol, and dipentaerythritol; sugar alcohol compounds such as erythritol, D-threitol, L-arabinitol, ribitol, xylitol, sorbitol, mannitol, galactitol, and rhamnitol; monosaccharides such as arabinose, ribose, xylose, glucose, mannose, galactose, fructose, sorbose, rhamnose, fucose, and ribodesose; disaccharides such as trehalose, sucrose, maltose, cellobiose, gentiobiose, lactose, and melibiose; trisaccharides such as raffinose, gentianose, and melezitose; and tetrasaccharides such as stachyose.

Examples of the polyolefin polyol include, but are not particularly limited to, polybutadiene, hydrogenated polybutadiene, polyisoprene, and hydrogenated polyisoprene having two or more hydroxy groups.

Examples of the fluorine polyol include, but are not particularly limited to, polyol containing fluorine in the molecule, for example, copolymers of fluoroolefin, cyclovinyl ether, hydroxyalkyl vinyl ether, monocarboxylic acid vinyl ester, and the like disclosed in Japanese Patent Laid-Open Nos. 57-34107 and 61-275311.

(Curing agent)

The polyurethane composition of the present embodiment preferably comprises a curing agent. The curing agent is not particularly limited as long as the compound reacts with a hydroxy group. A curing agent having two or more terminal reactive functional groups is preferred. Examples of such a curing agent include, but are not particularly limited to, melamine resin and isocyanate compounds. The melamine resin is not particularly limited, and, for example, methyl etherified melamine resin, or mixed etherified melamine resin of methyl ether and ethyl ether is commercially available. Examples of the isocyanate compound can include, but are not particularly limited to: aliphatic diisocyanates such as hexamethylene diisocyanate and trimethylhexamethylene diisocyanate; alicyclic diisocyanates such as isophorone diisocyanate; aromatic diisocyanates such as tolylene diisocyanate, 4,4'-diphenylmethane diisocyanate, xylylene diisocyanate and naphthylene diisocyanate; isocyanate compounds having three or more isocyanate groups, such as triphenylmethane-4,4'-4"-triisocyanate, 1,3,5-triisocyanatobenzene, 2,4,6-triisocyanatotoluene and 4,4'-dimethyldiphenylmethane-2,2',5,5'-tetraisocyanate; and isocyanurate-modified products and biuret-modified products of these isocyanates. Examples of the commercially available product of the isocyanate compound include, but are not particularly limited to, "Duranate (trade name)" series of 24A-100, 22A-75P, TPA-100, TKA-100, P301-75E, D101, D201, 21S-75E, MFA-75B, MHG-80B, TUL-100, TLA-100, TSA-100, TSS-100, TSE-100, E402-80B, E405-80B, AE700-100, A201H, 17B-60P, TPA-B80E, MF-B60B, MF-K60B, SBB-70P, SBN-70D, E402-B80B, WB40-100, WT30-100, WT31-100, WB40-80D, WT20-100, WL70-100, WE50-100, and WM44-L70G manufactured by Asahi Kasei Corp.

(Other components)

The polyurethane composition of the present embodiment may further comprise other components such as a solvent, a catalyst, urethane beads, a flatting agent, a leveling agent, and an antisettling agent, in addition to the polycarbonate diol composition component, the polyol component other than the polycarbonate diol composition, and the isocyanate component. Appropriate addition of these other components can produce polyurethane compositions differing in properties, such as a soft-feel coating material and a clear coating material.

The coating material composition of the present embodiment can be used as, for example, a coating material for automobiles, buses, rail vehicles, building site equipment, agricultural machines, floors, walls or roofs of architectures, metal products, mortar or concrete products, wood products, plastic products, and ceramics construction materials such as calcium silicate boards or plaster boards.

[Examples]

Hereinafter, the present embodiment will be described further specifically with reference to specific Examples

and Comparative Examples. However, the present embodiment is not limited by these Examples and Comparative Examples. Evaluation and physical properties in Examples and Comparative Examples mentioned later were evaluated and determined by the methods given below. In the present Examples, the terms "parts" and "%" are based on mass, unless otherwise specified.

(Measurement of number-average molecular weight)

The number-average molecular weight was determined from a hydroxy value as mentioned later.

(Measurement of hydroxy value)

The hydroxy value was measured by the following method.

A volumetric flask was used, and pyridine was added to 12.5 g of acetic anhydride so as to bring the amount to 50 mL, to prepare an acetylation reagent. In a 100 mL eggplant-shaped flask, 2.5 to 5.0 g of a sample was weighed and placed. To the eggplant-shaped flask, 5 mL of the acetylation reagent and 10 mL of toluene were added with a whole pipette. Then, a condenser was attached to the flask, and the mixture was stirred and heated at 100°C for 1 hour. To the eggplant-shaped flask, 2.5 mL of distilled water was added with a whole pipette, and the mixture was further heated and stirred for 10 minutes. After cooling for 2 to 3 minutes, to the eggplant-shaped flask, 12.5 mL of ethanol was added, and 2 to 3 drops of phenolphthalein were added as an indicator, followed by titration with 0.5 mol/L ethanolic potassium hydroxide. In a 100 mL eggplant-shaped flask, 5 mL of the acetylation reagent, 10 mL of toluene and 2.5 mL of distilled water were placed, and heated and stirred for 10 minutes, followed by titration in the same way as above (blank test). On the basis of the results, the hydroxy value was calculated according to the following expression (I):

$$\text{Hydroxy value (mg-KOH/g)} = \{(D - C) \times 28.05 \times f\} / E \quad \ldots \quad (I)$$

C represents the amount of the sample titrated (mL); D represents the amount titrated (mL) in the blank test; E represents the weight of the sample (g); and f represents the factor of the titration solution.

The number-average molecular weights of polycarbonate diol and polycarbonate diol composition were calculated according to the following expression (II) :

$$\text{Number-average molecular weight} = 2 / (G \times 10^{-3} / 56.11) \quad \ldots \quad (II)$$

G represents the hydroxy value (mg-KOH/g).

(Molar ratio of dihydroxy compound except for dihydroxy compound having polyoxyethylene structure after hydrolysis)

The molar ratio of the dihydroxy compound except for the dihydroxy compound having the polyoxyethylene structure after hydrolysis was measured as follows.

In a 100 mL eggplant-shaped flask, 1 g of a sample was placed, and 30 g of ethanol and 4 g of potassium hydroxide were further placed, and the mixture was reacted at 100°C for 1 hour. After cooling to room temperature, to the eggplant-shaped flask, 2 to 3 drops of phenolphthalein were added as an indicator, and the mixture was neutralized with hydrochloric acid. The eggplant-shaped flask was cooled in a refrigerator for 1 hour. Then, precipitated salts were removed by filtration, and the resultant was analyzed by gas chromatography. The concentration of each dihydroxy compound was calculated in terms of % by weight from an area ratio obtained by preparing in advance a calibration curve from each dihydroxy compound known as a standard, and performing gas chromatography (GC). The analysis was conducted using gas chromatography GC-14B (manufactured by Shimadzu Corp.) equipped with DB-WAX (manufactured by J&W Scientific, Inc.) as a column and a flame ionization detector (FID) as a detector. The heating profile of the column was 60°C kept for 5 minutes which was then raised to 250°C at 10°C/min. The molar ratio of the dihydroxy compound except for the dihydroxy compound having the polyoxyethylene structure was calculated from % by weight obtained by the gas chromatography and the molecular weight of each dihydroxy compound.

(Average number of carbon atoms)

The average number of carbon atoms was calculated according to the following expression (III) from the molar ratio of the dihydroxy compound except for the dihydroxy compound having the polyoxyethylene structure after hydrolysis:

$$\Sigma \text{ (The number of carbon atoms of the dihydroxy compound except for the dihydroxy compound having the polyoxyethylene structure} \times \text{Molar fraction of diol thereof) ... (III)}$$

In the case of, for example, 2-methyl-1,3-propanediol (92 mol%) and 1,6-hexanediol (8 mol%) as diol as a result of the molar ratio of the dihydroxy compound except for the dihydroxy compound having the polyoxyethylene structure after hydrolysis, the average number of carbon atoms was $4 \times 0.92 + 6 \times 0.08 = 4.16$.

Stain resistance and chemical resistance were evaluated as the physical properties of a polycarbonate diol composition as follows.

[Stain resistance]

An aluminum plate (JIS H4000, 2 mm × 100 mm × 150 mm) was painted white at a dry film thickness of 20 to 30 μm using Mightylac GII300 White (manufactured by Nipponpaint Co., Ltd.) as a base agent and Mightylac GII Hardener (manufactured by Nipponpaint Co., Ltd.) as a curing agent to prepare a white plate. A prepared coating material composition was added dropwise to the upper part of this white plate such that the dry film thickness was 30 to 40 μm. The white plate was coated therewith using a glass rod (diameter: 8 mm). After baking at 60°C for 30 minutes, the plate was dried at 23°C in a 50% RH atmosphere for 1 week on a horizontal table to obtain a coating film. L*a*b (E0) of the obtained coating film was measured using a color meter (Suga Test Instruments Co., Ltd., SM-P45). A line was drawn on the coating film using Magic Ink GOKUBUTO Blue (MGD-T3) manufactured by Teranishi Chemical Industry Co., Ltd. Thirty minutes later, the ink was wiped off using acetone. Then, the coating film was dried at room temperature for 30 minutes, and L*a*b (E) of the coating film (portion coated with the ink) was measured using a color meter. Color difference (ΔE) was determined according to the following expression (IV):

$$\text{Color difference } (\Delta E) = E - E0 \text{ ... (IV)}$$

Subsequently, the stain resistance was evaluated from the obtained color difference according to the following criteria.

(Evaluation criteria)

◎: The color difference was less than 1%.
○: The color difference was 1% or more and less than 1.5%.
Δ: The color difference was 1.5% or more and less than 2%.
×: The color difference was 2% or more or was unevaluable.

[Chemical resistance]

(Sunscreen resistance)

A prepared coating material composition was added dropwise to the upper part of an ABS plate (Mitsubishi Plastics, Inc., 802, 70 mm × 150 mm square, 2 mm thick) such that the dry film thickness was 30 to 40 μm. The plate was coated therewith using a glass rod (diameter: 8 mm). After baking at 60°C for 30 minutes, the plate was dried at 23°C in a 50% RH atmosphere for 1 week on a horizontal table to obtain a coating film. A sunscreen agent (Neutrogena

Ultra Sheer DRY-TOUCH SUNSCREEN Broad Spectrum SPF 45) was applied at 2 g/4 $cm^2$ onto the surface of the coating film and heated at 55°C for 1 hour. Then, the surface of the coating film was thoroughly washed with a small amount of a neutral detergent to remove the sunscreen agent. The coating film was dried at 23°C in a 50% RH atmosphere on a horizontal table and then visually evaluated for the absence of remnants of the sunscreen or abnormalities such as swelling or peeling of the coating film.

In Tables 1 and 2, "○" represents that the appearance of the coating film was not changed; "Δ" represents that the appearance of the coating film was slightly changed; and "×" represents that the appearance of the coating film was changed to have swelling and/or remnants.

(Solvent resistance)

A necessary number of removable paper tack tapes was attached as spacers to both ends of a glass plate (JIS R3202, 75 mm × 150 mm square, 1 mm thick), and a prepared coating material composition was then added dropwise to the upper part of the plate such that the dry film thickness was 40 to 50 μm. The plate was coated therewith using a glass rod (diameter: 8 mm). After baking at 60°C for 30 minutes, the plate was dried at 23°C in a 50% RH atmosphere for 1 week on a horizontal table to obtain a coating film. A cotton ball impregnated with a solvent (xylene, ethanol, and oleic acid) was left standing for 3 minutes on the surface of the coating film at 23°C in a 50% RH atmosphere on a horizontal table and visually evaluated for the absence of abnormalities such as scratches or whitening.

In Table 3, "○" represents that the appearance of the coating film was not changed; "Δ" represents that the appearance of the coating film was slightly changed; and "×" represents that the appearance of the coating film was changed to have swelling, remnants, and/or white turbidity.

[Synthesis Example 1]

A 3 L glass flask (reactor) equipped with a rectifying column packed with a regular packing material, and a stirring apparatus was charged with 550 g of 2-methyl-1,3-propanediol, 423 g of 1,4-butanediol, and 952 g of ethylene carbonate. Then, 0.1925 g of titanium tetra-n-butoxide was placed therein as a catalyst. The reactor was dipped in an oil bath of 170°C. While a portion of the distillate was extracted, the mixture was reacted at a reaction temperature of 155°C for 25 hours. Subsequently, the reactor was connected directly to a condenser. The temperature of the oil bath was raised to 170°C. Then, the pressure was gradually lowered, and the reaction was further performed for 5 hours to obtain polycarbonate diol a-1 (577 g) which was a liquid at ordinary temperature.

The obtained polycarbonate diol a-1 had a hydroxy value of 53.0 mg-KOH/g and a number-average molecular weight of 2117.

[Synthesis Example 2]

A 1 L glass flask (reactor) equipped with a stirring apparatus was charged with 80 parts by mass (320 g) of the polycarbonate diol a-1 obtained in Synthesis Example 1, and 20 parts by mass (80 g) of polyoxyethylene diol (manufactured by Wako Pure Chemical Industries, Ltd., "polyethylene glycol 1000" (trade name), number-average molecular weight: approximately 1000). Subsequently, the mixture was heated with stirring, and kept at approximately 145°C in terms of the inside temperature of the reactor for 6 hours. Subsequently, 85% phosphoric acid was added in an amount of 2.0 times the molar ratio of titanium tetra-n-butoxide, and the mixture was heated at 115°C in terms of the inside temperature of the reactor for 3 hours to obtain polycarbonate diol composition A-1. The progression and the like of transesterification reaction was confirmed by measuring the reaction solution over time by gel permeation chromatography (hereinafter, also abbreviated to "GPC"), and confirming the disappearance of peaks derived from the starting materials and the appearance of a peak derived from a product over time. It was also confirmed as to the finally obtained polycarbonate diol composition by GPC measurement over time that the reaction progressed substantially quantitatively on the basis of the amounts of the starting materials added, and the composition had a structure corresponding thereto. Specifically, the obtained polycarbonate diol composition A-1 contained a polyoxyethylene structure represented by (formula 1A-1) and a polycarbonate structure represented by (formula 2A-1), had hydroxy groups at both ends, and contained 20% by mass of the polyoxyethylene structure and 80% by mass of the polycarbonate structure based on the total mass of the polyoxyethylene structure and the polycarbonate structure.

$$-\left(CH_2-CH_2-O\right)_m- \quad \text{... (Formula 1A-1)}$$

wherein m was 22.3.

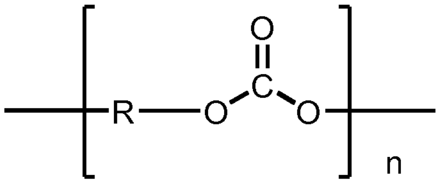

... (Formula 2A-1)

wherein R was a 2-methyltrimethylene group or a tetramethylene group and n was 18.1.

The obtained polycarbonate diol composition A-1 had a hydroxy value of 64.1 mg-KOH/g, a number-average molecular weight of 1751, and an average number of carbon atoms of 4.0.

As a result of hydrolyzing the obtained polycarbonate diol composition A-1, a dihydroxy compound except for a dihydroxy compound having a polyoxyethylene structure among the obtained dihydroxy compounds comprised a dihydroxy compound represented by (formula 3A-1) (molar ratio: 100%).

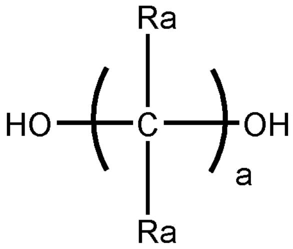

... (Formula 3A-1)

wherein Ra was a hydrogen group or a methyl group; and a was 3 or 4.

[Synthesis Example 3]

A 1 L glass flask (reactor) equipped with a rectifying column packed with a regular packing material, and a stirring apparatus was charged with 370 g of 1,3-propanediol, 4 g of 1,10-decanediol, and 430 g of ethylene carbonate. Then, 0.08 g of titanium tetra-n-butoxide was placed therein as a catalyst. The reactor was dipped in an oil bath of 190°C. While a portion of the distillate was extracted, the mixture was reacted at a reaction temperature of 160 to 170°C for 12 hours. Subsequently, the reactor was connected directly to a condenser. The temperature of the oil bath was raised to 180°C. Then, the pressure was gradually lowered, and the reaction was further performed for 5 hours to obtain polycarbonate diol a-2 (265 g) which was a liquid at ordinary temperature.

The obtained polycarbonate diol a-2 had a hydroxy value of 52.8 mg-KOH/g and a number-average molecular weight of 2125.

[Synthesis Example 4]

A 0.5 L glass flask (reactor) equipped with a stirring apparatus was charged with 90 parts by mass (180 g) of the polycarbonate diol a-2 obtained in Synthesis Example 3, and 10 parts by mass (20 g) of polyoxyethylene diol (manufactured by Wako Pure Chemical Industries, Ltd., "polyethylene glycol 1000" (trade name), number-average molecular weight: approximately 1000). Subsequently, the mixture was heated with stirring, and kept at approximately 145°C in terms of the inside temperature of the reactor for 6 hours. Subsequently, 85% phosphoric acid was added in an amount of 2.0 times the molar ratio of titanium tetra-n-butoxide, and the mixture was heated at 115°C in terms of the inside temperature of the reactor for 3 hours to obtain polycarbonate diol composition A-2. The progression and the like of transesterification reaction was confirmed by measuring the reaction solution over time by GPC, and confirming the disappearance of peaks derived from the starting materials and the appearance of a peak derived from a product over time. It was also confirmed as to the finally obtained polycarbonate diol composition by GPC measurement over time that the reaction progressed substantially quantitatively on the basis of the amounts of the starting materials added, and the composition had a structure corresponding thereto. Specifically, the obtained polycarbonate diol composition A-2 contained a polyoxyethylene structure represented by (formula 1A-2) and a polycarbonate structure represented by (formula 2A-2), had hydroxy groups at both ends, and contained 10% by mass of the polyoxyethylene structure and 90% by mass of the polycarbonate structure based on the total mass of the polyoxyethylene structure and the polycar-

bonate structure.

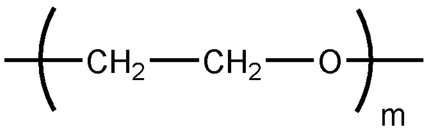

... (Formula 1A-2)

wherein m was 22.3.

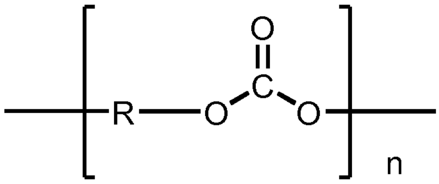

... (Formula 2A-2)

wherein R was a trimethylene group or a decamethylene group; and n was 18.8.

The obtained polycarbonate diol composition A-2 had a hydroxy value of 58.7 mg-KOH/g, a number-average molecular weight of 1912, and an average number of carbon atoms of 3.7.

As a result of hydrolyzing the obtained polycarbonate diol composition A-2, a dihydroxy compound except for a dihydroxy compound having a polyoxyethylene structure among the obtained dihydroxy compounds comprised a dihydroxy compound represented by (formula 3A-2) (molar ratio: 90%).

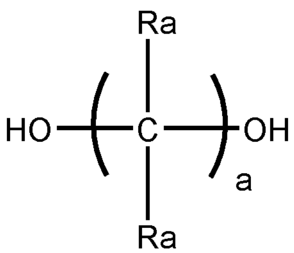

... (Formula 3A-2)

wherein Ra was hydrogen; and a was 3.

[Synthesis Example 5]

A 1 L glass flask (reactor) equipped with a rectifying column packed with a regular packing material, and a stirring apparatus was charged with 330 g of 1,4-butanediol, 130 g of 1,6-hexanediol, and 415 g of ethylene carbonate. Then, 0.093 g of titanium tetra-n-butoxide was placed therein as a catalyst. The reactor was dipped in an oil bath of 170°C. While a portion of the distillate was extracted, the mixture was reacted at a reaction temperature of 155 to 165°C for 18 hours. Subsequently, the reactor was connected directly to a condenser. The temperature of the oil bath was raised to 180°C. Then, the pressure was gradually lowered, and the reaction was further performed for 5 hours to obtain polycarbonate diol a-3 (363 g) which was a liquid at ordinary temperature.

The obtained polycarbonate diol a-3 had a hydroxy value of 109.1 mg-KOH/g and a number-average molecular weight of 1029.

[Synthesis Example 6]

A 0.5 L glass flask (reactor) equipped with a stirring apparatus was charged with 90 parts by mass (270 g) of the polycarbonate diol a-3 obtained in Synthesis Example 5, and 10 parts by mass (30 g) of polyoxyethylene diol (manufactured by Wako Pure Chemical Industries, Ltd., "polyethylene glycol 1000" (trade name), number-average molecular weight: approximately 1000). Subsequently, the mixture was heated with stirring, and kept at approximately 145°C in terms of the inside temperature of the reactor for 6 hours. Subsequently, 85% phosphoric acid was added in an amount of 2.0 times the molar ratio of titanium tetra-n-butoxide, and the mixture was heated at 115°C in terms of the inside temperature of the reactor for 3 hours to obtain polycarbonate diol composition A-3. The progression and the like

of transesterification reaction was confirmed by measuring the reaction solution over time by GPC, and confirming the disappearance of peaks derived from the starting materials and the appearance of a peak derived from a product over time. It was also confirmed as to the finally obtained polycarbonate diol composition by GPC measurement over time that the reaction progressed substantially quantitatively on the basis of the amounts of the starting materials added, and the composition had a structure corresponding thereto. Specifically, the obtained polycarbonate diol composition A-3 contained a polyoxyethylene structure represented by (formula 1A-3) and a polycarbonate structure represented by (formula 2A-3), had hydroxy groups at both ends, and contained 10% by mass of the polyoxyethylene structure and 90% by mass of the polycarbonate structure based on the total mass of the polyoxyethylene structure and the polycarbonate structure.

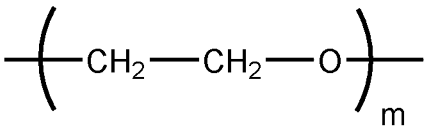

... (Formula 1A-3)

wherein m was 22.3.

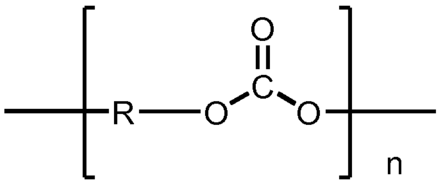

... (Formula 2A-3)

wherein R was a tetramethylene group or a hexamethylene group; and n was 8.1.

The obtained polycarbonate diol composition A-3 had a hydroxy value of 108.3 mg-KOH/g, a number-average molecular weight of 1036, and an average number of carbon atoms of 4.6.

As a result of hydrolyzing the obtained polycarbonate diol composition A-3, a dihydroxy compound except for a dihydroxy compound having a polyoxyethylene structure among the obtained dihydroxy compounds comprised a dihydroxy compound represented by (formula 3A-3) (molar ratio: 70%).

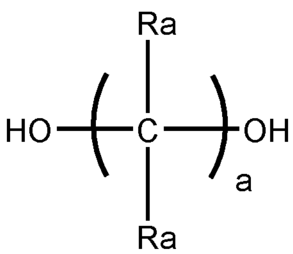

... (Formula 3A-3)

wherein Ra was hydrogen; and a was 4.

[Synthesis Example 7]

A 0.5 L glass flask (reactor) equipped with a stirring apparatus was charged with 90 parts by mass (180 g) of the polycarbonate diol a-1 obtained in Synthesis Example 1, and 10 parts by mass (20 g) of polyoxyethylene diol (manufactured by Wako Pure Chemical Industries, Ltd., "polyethylene glycol 2000" (trade name), number-average molecular weight: approximately 2000). Subsequently, the mixture was heated with stirring, and kept at approximately 145°C in terms of the inside temperature of the reactor for 6 hours. Subsequently, 85% phosphoric acid was added in an amount of 2.0 times the molar ratio of titanium tetra-n-butoxide, and the mixture was heated at 115°C in terms of the inside temperature of the reactor for 3 hours to obtain polycarbonate diol composition A-4. The progression and the like of transesterification reaction was confirmed by measuring the reaction solution over time by GPC, and confirming the disappearance of peaks derived from the starting materials and the appearance of a peak derived from a product over time. It was also confirmed as to the finally obtained polycarbonate diol composition by GPC measurement over time that the reaction progressed substantially quantitatively on the basis of the amounts of the starting materials added, and

the composition had a structure corresponding thereto. Specifically, the obtained polycarbonate diol composition A-4 contained a polyoxyethylene structure represented by (formula 1A-4) and a polycarbonate structure represented by (formula 2A-4), had hydroxy groups at both ends, and contained 20% by mass of the polyoxyethylene structure and 80% by mass of the polycarbonate structure based on the total mass of the polyoxyethylene structure and the polycarbonate structure.

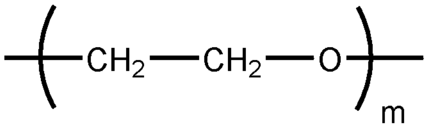

... (Formula 1A-4)

wherein m was 45.0.

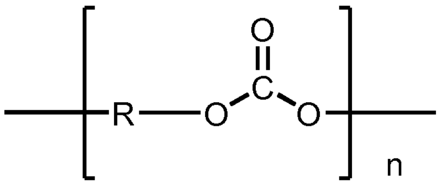

... (Formula 2A-4)

wherein R was a 2-methyltrimethylene group or a tetramethylene group and n was 18.1.

The obtained polycarbonate diol composition A-4 had a hydroxy value of 53.3 mg-KOH/g, a number-average molecular weight of 2105, and an average number of carbon atoms of 4.0.

As a result of hydrolyzing the obtained polycarbonate diol composition A-4, a dihydroxy compound except for a dihydroxy compound having a polyoxyethylene structure among the obtained dihydroxy compounds comprised a dihydroxy compound represented by (formula 3A-4) (molar ratio: 100%).

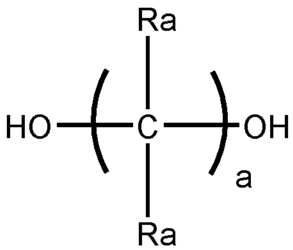

... (Formula 3A-4)

wherein Ra was hydrogen or a methyl group; and a was 3 or 4.

[Synthesis Example 8]

A 2 L glass flask (reactor) equipped with a rectifying column packed with a regular packing material, and a stirring apparatus was charged with 458 g of 1,5-pentanediol, 500 g of 1,6-hexanediol, and 760 g of ethylene carbonate. Then, 0.0860 g of titanium tetra-n-butoxide was placed therein as a catalyst. The reactor was dipped in an oil bath of 180°C. While a portion of the distillate was extracted, the mixture was reacted at a reaction temperature of 165 to 175°C for 12 hours. Subsequently, the reactor was connected directly to a condenser. The temperature of the oil bath was raised to 190°C. Then, the pressure was gradually lowered, and the reaction was further performed for 3 hours. As a result, polycarbonate diol a-4 (855 g) which was a liquid at ordinary temperature was obtained.

The obtained polycarbonate diol a-4 had a hydroxy value of 108.8 mg-KOH/g and a number-average molecular weight of 1031.

[Synthesis Example 9]

A 1.0 L glass flask (reactor) equipped with a stirring apparatus was charged with 90 parts by mass (360 g) of the polycarbonate diol a-4 obtained in Synthesis Example 8, and 10 parts by mass (40 g) of polyoxyethylene diol (manufactured by Wako Pure Chemical Industries, Ltd., "polyethylene glycol 1000" (trade name), number-average

molecular weight: approximately 1000). Subsequently, the mixture was heated with stirring, and kept at approximately 145°C in terms of the inside temperature of the reactor for 6 hours. Subsequently, 85% phosphoric acid was added in an amount of 2.0 times the molar ratio of titanium tetra-n-butoxide, and the mixture was heated at 115°C in terms of the inside temperature of the reactor for 3 hours to obtain polycarbonate diol composition A-5. The progression and the like of transesterification reaction was confirmed by measuring the reaction solution over time by GPC, and confirming the disappearance of peaks derived from the starting materials and the appearance of a peak derived from a product over time. It was also confirmed as to the finally obtained polycarbonate diol composition by GPC measurement over time that the reaction progressed substantially quantitatively on the basis of the amounts of the starting materials added, and the composition had a structure corresponding thereto. Specifically, the obtained polycarbonate diol composition A-5 contained a polyoxyethylene structure represented by (formula 1A-5) and a polycarbonate structure represented by (formula 2A-5), had hydroxy groups at both ends, and contained 10% by mass of the polyoxyethylene structure and 90% by mass of the polycarbonate structure based on the total mass of the polyoxyethylene structure and the polycarbonate structure.

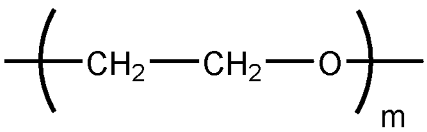

... (Formula 1A-5)

wherein m was 22.3.

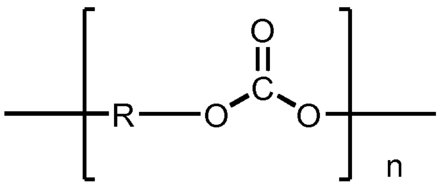

... (Formula 2A-5)

wherein R was a pentamethylene group or a hexamethylene group; and n was 7.4.

The obtained polycarbonate diol composition A-5 had a hydroxy value of 109.7 mg-KOH/g, a number-average molecular weight of 1023, and an average number of carbon atoms of 5.5.

As a result of hydrolyzing the obtained polycarbonate diol composition A-5, no dihydroxy compounds represented by (formula 3) was contained as a dihydroxy compound except for a dihydroxy compound having a polyoxyethylene structure among the obtained dihydroxy compounds.

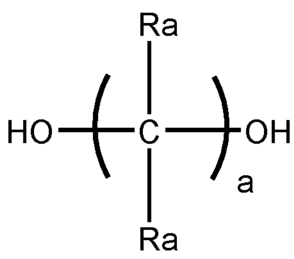

... (Formula 3)

wherein Ra is a hydrogen group, or an aliphatic hydrocarbon group having 1 to 5 carbon atoms, and Ra moieties are the same or different; and a is a number of 2 or larger and 4 or smaller.

[Synthesis Example 10]

A 1 L glass flask (reactor) equipped with a rectifying column packed with a regular packing material, and a stirring apparatus was charged with 230 g of 1,5-pentanediol, 250 g of 1,6-hexanediol, and 400 g of ethylene carbonate. Then, 0.0468 g of titanium tetra-n-butoxide was placed therein as a catalyst. The reactor was dipped in an oil bath of 180°C. While a portion of the distillate was extracted, the mixture was reacted at a reaction temperature of 165°C for 12 hours. Subsequently, the reactor was connected directly to a condenser. The temperature of the oil bath was raised to 185°C. Then, the pressure was gradually lowered, and the reaction was further performed for 4 hours to obtain

polycarbonate diol a-5 (437 g) which was a liquid at ordinary temperature.

The obtained polycarbonate diol a-5 had a hydroxy value of 55.6 mg-KOH/g and a number-average molecular weight of 2018.

[Synthesis Example 11]

A 0.5 L glass flask (reactor) equipped with a stirring apparatus was charged with 80 parts by mass (240 g) of the polycarbonate diol a-5 obtained in Synthesis Example 10, and 20 parts by mass (60 g) of polyoxyethylene diol (manufactured by Wako Pure Chemical Industries, Ltd., "polyethylene glycol 1000" (trade name), number-average molecular weight: approximately 1000). Subsequently, the mixture was heated with stirring, and kept at approximately 145°C in terms of the inside temperature of the reactor for 6 hours to obtain polycarbonate diol composition A-6. The progression and the like of transesterification reaction was confirmed by measuring the reaction solution over time by GPC, and confirming the disappearance of peaks derived from the starting materials and the appearance of a peak derived from a product over time. It was also confirmed as to the finally obtained polycarbonate diol composition by GPC measurement over time that the reaction progressed substantially quantitatively on the basis of the amounts of the starting materials added, and the composition had a structure corresponding thereto. Specifically, the obtained polycarbonate diol composition A-6 contained a polyoxyethylene structure represented by (formula 1A-6) and a polycarbonate structure represented by (formula 2A-6), had hydroxy groups at both ends, and contained 20% by mass of the polyoxyethylene structure and 80% by mass of the polycarbonate structure based on the total mass of the polyoxyethylene structure and the polycarbonate structure.

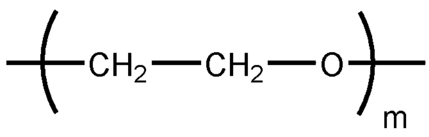

... (Formula 1A-6)

wherein m was 22.3.

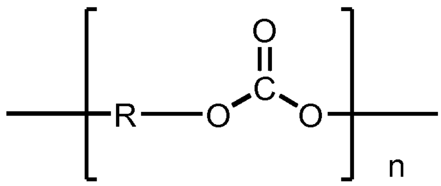

... (Formula 2A-6)

wherein R was a pentamethylene group or a hexamethylene group; and n was 14.6.

The obtained polycarbonate diol composition A-6 had a hydroxy value of 66.1 mg-KOH/g, a number-average molecular weight of 1697, and an average number of carbon atoms of 5.5.

As a result of hydrolyzing the obtained polycarbonate diol composition A-6, no dihydroxy compounds represented by (formula 3) was contained as a dihydroxy compound except for a dihydroxy compound having a polyoxyethylene structure among the obtained dihydroxy compounds.

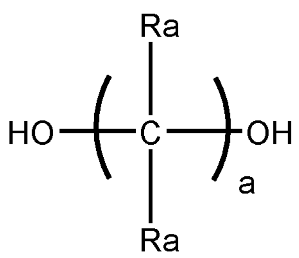

... (Formula 3)

wherein Ra is a hydrogen group, or an aliphatic hydrocarbon group having 1 to 5 carbon atoms, and Ra moieties are the same or different; and a is a number of 2 or larger and 4 or smaller.

[Synthesis Example 12]

A 1 L glass flask (reactor) equipped with a rectifying column packed with a regular packing material, and a stirring apparatus was charged with 35 g of 1,3-propanediol, 430 g of 1,5-pentanediol, and 410 g of ethylene carbonate. Then, 0.053 g of titanium tetra-n-butoxide was placed therein as a catalyst. The reactor was dipped in an oil bath of 185°C. While a portion of the distillate was extracted, the mixture was reacted at a reaction temperature of 165 to 175°C for 12 hours. Subsequently, the reactor was connected directly to a condenser. The temperature of the oil bath was raised to 195°C. Then, the pressure was gradually lowered, and the reaction was further performed for 5 hours to obtain polycarbonate diol a-7 (446 g) which was a liquid at ordinary temperature.
The obtained polycarbonate diol a-7 had a hydroxy value of 108.1 mg-KOH/g and a number-average molecular weight of 1038.

[Synthesis Example 13]

A 0.5 L glass flask (reactor) equipped with a stirring apparatus was charged with 90 parts by mass (270 g) of the polycarbonate diol a-7 obtained in Synthesis Example 12, and 10 parts by mass (30 g) of polyoxyethylene diol (manufactured by Wako Pure Chemical Industries, Ltd., "polyethylene glycol 1000" (trade name), number-average molecular weight: approximately 1000). Subsequently, the mixture was heated with stirring, and kept at approximately 145°C in terms of the inside temperature of the reactor for 6 hours. Subsequently, 85% phosphoric acid was added in an amount of 2.0 times the molar ratio of titanium tetra-n-butoxide, and the mixture was heated at 115°C in terms of the inside temperature of the reactor for 3 hours to obtain polycarbonate diol composition A-7. The progression and the like of transesterification reaction was confirmed by measuring the reaction solution over time by GPC, and confirming the disappearance of peaks derived from the starting materials and the appearance of a peak derived from a product over time. It was also confirmed as to the finally obtained polycarbonate diol composition by GPC measurement over time that the reaction progressed substantially quantitatively on the basis of the amounts of the starting materials added, and the composition had a structure corresponding thereto. Specifically, the obtained polycarbonate diol composition A-7 contained a polyoxyethylene structure represented by (formula 1A-3) and a polycarbonate structure represented by (formula 2A-3), had hydroxy groups at both ends, and contained 10% by mass of the polyoxyethylene structure and 90% by mass of the polycarbonate structure based on the total mass of the polyoxyethylene structure and the polycarbonate structure.

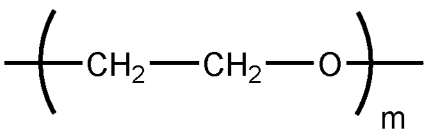

... (Formula 1A-3)

wherein m was 22.3.

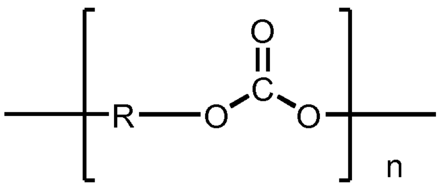

... (Formula 2A-3)

wherein R was a trimethylene group or a heptamethylene group; and n was 8.0.
The obtained polycarbonate diol composition A-7 had a hydroxy value of 108.4 mg-KOH/g, a number-average molecular weight of 1035, and an average number of carbon atoms of 4.8.
As a result of hydrolyzing the obtained polycarbonate diol composition A-7, a dihydroxy compound except for a dihydroxy compound having a polyoxyethylene structure among the obtained dihydroxy compounds comprised a dihydroxy compound represented by (formula 3A-3) (molar ratio: 10%).

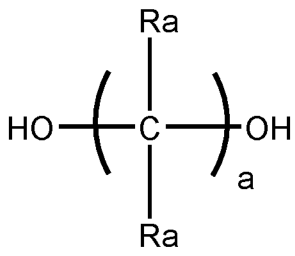

... (Formula 3A-3)

wherein Ra was hydrogen; and a was 3.

[Synthesis Example 14]

A 1 L glass flask (reactor) equipped with a rectifying column packed with a regular packing material, and a stirring apparatus was charged with 170 g of 1,4-butanediol, 430 g of 1,6-hexanediol, and 410 g of ethylene carbonate. Then, 0.093 g of titanium tetra-n-butoxide was placed therein as a catalyst. The reactor was dipped in an oil bath of 170°C. While a portion of the distillate was extracted, the mixture was reacted at a reaction temperature of 155 to 165°C for 20 hours. Subsequently, the reactor was connected directly to a condenser. The temperature of the oil bath was raised to 180°C. Then, the pressure was gradually lowered, and the reaction was further performed for 5 hours to obtain polycarbonate diol a-8 (407 g) which was a liquid at ordinary temperature.
The obtained polycarbonate diol a-8 had a hydroxy value of 111.0 mg-KOH/g and a number-average molecular weight of 1011.

[Synthesis Example 15]

A 0.5 L glass flask (reactor) equipped with a stirring apparatus was charged with 90 parts by mass (270 g) of the polycarbonate diol a-8 obtained in Synthesis Example 14, and 10 parts by mass (30 g) of polyoxyethylene diol (manufactured by Wako Pure Chemical Industries, Ltd., "polyethylene glycol 1000" (trade name), number-average molecular weight: approximately 1000). Subsequently, the mixture was heated with stirring, and kept at approximately 145°C in terms of the inside temperature of the reactor for 6 hours. Subsequently, 85% phosphoric acid was added in an amount of 2.0 times the molar ratio of titanium tetra-n-butoxide, and the mixture was heated at 115°C in terms of the inside temperature of the reactor for 3 hours to obtain polycarbonate diol composition A-8. The progression and the like of transesterification reaction was confirmed by measuring the reaction solution over time by GPC, and confirming the disappearance of peaks derived from the starting materials and the appearance of a peak derived from a product over time. It was also confirmed as to the finally obtained polycarbonate diol composition by GPC measurement over time that the reaction progressed substantially quantitatively on the basis of the amounts of the starting materials added, and the composition had a structure corresponding thereto. Specifically, the obtained polycarbonate diol composition A-8 contained a polyoxyethylene structure represented by (formula 1A-3) and a polycarbonate structure represented by (formula 2A-3), had hydroxy groups at both ends, and contained 10% by mass of the polyoxyethylene structure and 90% by mass of the polycarbonate structure based on the total mass of the polyoxyethylene structure and the polycarbonate structure.

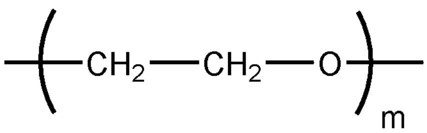

... (Formula 1A-3)

wherein m was 22.3.

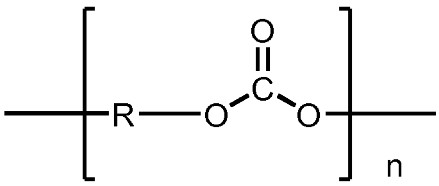

... (Formula 2A-3)

wherein R was a tetramethylene group or a hexamethylene group; and n was 7.5.

The obtained polycarbonate diol composition A-8 had a hydroxy value of 110.4 mg-KOH/g, a number-average molecular weight of 1016, and an average number of carbon atoms of 5.2.

As a result of hydrolyzing the obtained polycarbonate diol composition A-8, a dihydroxy compound except for a dihydroxy compound having a polyoxyethylene structure among the obtained dihydroxy compounds comprised a dihydroxy compound represented by (formula 3A-3) (molar ratio: 40%).

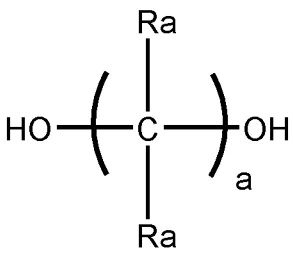

... (Formula 3A-3)

wherein Ra was hydrogen; and a was 4.

<Preparation of soft-feel coating material>

[Example 1]

15 g of the polycarbonate diol composition A-1 obtained in Synthesis Example 2 as a base agent, 5.17 g of "WT31-100 (trade name)" manufactured by Asahi Kasei Corp. (aqueous polyisocyanate; NCO content: 17.4%, solid content: 100%) as a curing agent, 33.04 g of ion-exchange water as a solvent, 0.61 g of "Borchers LH10 (trade name)" manufactured by OMG Borchers GmbH as an aqueous catalyst, 2.02 g of "ACEMATT TS 100 (trade name)" manufactured by Evonik Industries AG as a flatting agent, 0.12 g of "BYK-331" manufactured by BYK Additives & Instruments as a leveling agent, and 0.12 g of "Disparlon AQ-002" manufactured by Kusumoto Chemicals, Ltd. as an antisettling agent were each weighed and mixed at a NCO/OH molar ratio of 1.25. The mixture was stirred at 1000 rpm for 30 minutes using a stirrer and then defoamed using a vacuum defoamer to obtain a coating material composition. A coating film formed from the obtained coating material composition was evaluated (stain resistance and sunscreen resistance). The evaluation results are described in Table 1.

[Example 2]

15 g of the polycarbonate diol composition A-2 obtained in Synthesis Example 4 as a base agent, 4.74 g of "WT31-100 (trade name)" manufactured by Asahi Kasei Corp. as a curing agent, 32.33 g of ion-exchange water as a solvent, 0.59 g of "Borchers LH10 (trade name)" manufactured by OMG Borchers GmbH as an aqueous catalyst, 1.97 g of "ACEMATT TS 100 (trade name)" manufactured by Evonik Industries AG as a flatting agent, 0.12 g of "BYK-331" manufactured by BYK Additives & Instruments as a leveling agent, and 0.12 g of "Disparlon AQ-002" manufactured by Kusumoto Chemicals, Ltd. as an antisettling agent were each weighed and mixed at a NCO/OH molar ratio of 1.25. The mixture was stirred at 1000 rpm for 30 minutes using a stirrer and then defoamed using a vacuum defoamer to obtain a coating material composition. A coating film formed from the obtained coating material composition was evaluated (stain resistance and sunscreen resistance). The evaluation results are described in Table 1.

[Example 3]

15 g of the polycarbonate diol composition A-3 obtained in Synthesis Example 6 as a base agent, 8.74 g of "WT31-100 (trade name)" manufactured by Asahi Kasei Corp. as a curing agent, 38.88 g of ion-exchange water as a solvent, 0.71 g of "Borchers LH10 (trade name)" manufactured by OMG Borchers GmbH as an aqueous catalyst, 2.37 g of "ACEMATT TS 100 (trade name)" manufactured by Evonik Industries AG as a flatting agent, 0.14 g of "BYK-331" manufactured by BYK Additives & Instruments as a leveling agent, and 0.14 g of "Disparlon AQ-002" manufactured by Kusumoto Chemicals, Ltd. as an antisettling agent were each weighed and mixed at a NCO/OH molar ratio of 1.25. The mixture was stirred at 1000 rpm for 30 minutes using a stirrer and then defoamed using a vacuum defoamer to obtain a coating material composition. A coating film formed from the obtained coating material composition was evaluated (stain resistance and sunscreen resistance). The evaluation results are described in Table 1.

[Example 4]

15 g of the polycarbonate diol composition A-4 obtained in Synthesis Example 7 as a base agent, 4.28 g of "WT31-100 (trade name)" manufactured by Asahi Kasei Corp. as a curing agent, 31.57 g of ion-exchange water as a solvent, 0.58 g of "Borchers LH10 (trade name)" manufactured by OMG Borchers GmbH as an aqueous catalyst, 1.93 g of "ACEMATT TS 100 (trade name)" manufactured by Evonik Industries AG as a flatting agent, 0.12 g of "BYK-331" manufactured by BYK Additives & Instruments as a leveling agent, and 0.12 g of "Disparlon AQ-002" manufactured by Kusumoto Chemicals, Ltd. as an antisettling agent were each weighed and mixed at a NCO/OH molar ratio of 1.25. The mixture was stirred at 1000 rpm for 30 minutes using a stirrer and then defoamed using a vacuum defoamer to obtain a coating material composition. A coating film formed from the obtained coating material composition was evaluated (stain resistance and sunscreen resistance). The evaluation results are described in Table 1.

[Example 5]

15 g of the polycarbonate diol composition A-7 obtained in Synthesis Example 13 as a base agent, 8.75 g of "WT31-100 (trade name)" manufactured by Asahi Kasei Corp. (aqueous polyisocyanate; NCO content: 17.4%, solid content: 100%) as a curing agent, 38.89 g of ion-exchange water as a solvent, 0.71 g of "Borchers LH10 (trade name)" manufactured by OMG Borchers GmbH as an aqueous catalyst, 2.37 g of "ACEMATT TS 100 (trade name)" manufactured by Evonik Industries AG as a flatting agent, 0.14 g of "BYK-331" manufactured by BYK Additives & Instruments as a leveling agent, and 0.14 g of "Disparlon AQ-002" manufactured by Kusumoto Chemicals, Ltd. as an antisettling agent were each weighed and mixed at a NCO/OH molar ratio of 1.25. The mixture was stirred at 1000 rpm for 30 minutes using a stirrer and then defoamed using a vacuum defoamer to obtain a coating material composition. A coating film formed from the obtained coating material composition was evaluated (stain resistance and sunscreen resistance). The evaluation results are described in Table 1.

[Example 6]

15 g of the polycarbonate diol composition A-8 obtained in Synthesis Example 15 as a base agent, 8.91 g of "WT31-100 (trade name)" manufactured by Asahi Kasei Corp. (aqueous polyisocyanate; NCO content: 17.4%, solid content: 100%) as a curing agent, 39.16 g of ion-exchange water as a solvent, 0.72 g of "Borchers LH10 (trade name)" manufactured by OMG Borchers GmbH as an aqueous catalyst, 2.39 g of "ACEMATT TS 100 (trade name)" manufactured by Evonik Industries AG as a flatting agent, 0.14 g of "BYK-331" manufactured by BYK Additives & Instruments as a leveling agent, and 0.14 g of "Disparlon AQ-002" manufactured by Kusumoto Chemicals, Ltd. as an antisettling agent were each weighed and mixed at a NCO/OH molar ratio of 1.25. The mixture was stirred at 1000 rpm for 30 minutes using a stirrer and then defoamed using a vacuum defoamer to obtain a coating material composition. A coating film formed from the obtained coating material composition was evaluated (stain resistance and sunscreen resistance). The evaluation results are described in Table 1.

[Comparative Example 1]

15 g of the polycarbonate diol composition A-5 obtained in Synthesis Example 9 as a base agent, 8.85 g of "WT31-100 (trade name)" manufactured by Asahi Kasei Corp. as a curing agent, 39.07 g of ion-exchange water as a solvent, 0.72 g of "Borchers LH10 (trade name)" manufactured by OMG Borchers GmbH as an aqueous catalyst, 2.39 g of "ACEMATT TS 100 (trade name)" manufactured by Evonik Industries AG as a flatting agent, 0.14 g of "BYK-331" manufactured by BYK Additives & Instruments as a leveling agent, and 0.14 g of "Disparlon AQ-002" manufactured by Kusumoto Chemicals, Ltd. as an antisettling agent were each weighed and mixed at a NCO/OH molar ratio of 1.25. The mixture was stirred at 1000 rpm for 30 minutes using a stirrer and then defoamed using a vacuum defoamer to obtain a coating material composition. A coating film formed from the obtained coating material composition was evaluated (stain resistance and sunscreen resistance). The evaluation results are described in Table 1.

[Comparative Example 2]

15 g of the polycarbonate diol composition A-6 obtained in Synthesis Example 11 as a base agent, 5.33 g of "WT31-100 (trade name)" manufactured by Asahi Kasei Corp. as a curing agent, 33.30 g of ion-exchange water as a solvent, 0.61 g of "Borchers LH10 (trade name)" manufactured by OMG Borchers GmbH as an aqueous catalyst, 2.03 g of "ACEMATT TS 100 (trade name)" manufactured by Evonik Industries AG as a flatting agent, 0.12 g of "BYK-331" manufactured by BYK Additives & Instruments as a leveling agent, and 0.12 g of "Disparlon AQ-002" manufactured by Kusumoto Chemicals, Ltd. as an antisettling agent were each weighed and mixed at a NCO/OH molar ratio of 1.25. The

mixture was stirred at 1000 rpm for 30 minutes using a stirrer and then defoamed using a vacuum defoamer to obtain a coating material composition. A coating film formed from the obtained coating material composition was evaluated (stain resistance and sunscreen resistance). The evaluation results are described in Table 1.

[Example 7]

15 g of the polycarbonate diol composition A-1 obtained in Synthesis Example 2 as a base agent, 3.44 g of "TPA-100 (trade name)" manufactured by Asahi Kasei Corp. (polyisocyanate; NCO content: 23.0%, solid content: 100%) as a curing agent, 30.41 g of butyl acetate as a solvent, 0.18 g of dibutyltin dilaurate diluted into 10% by mass with butyl acetate as a catalyst, 1.84 g of "ACEMATT TS 100 (trade name)" manufactured by Evonik Industries AG as a flatting agent, and 0.11 g of "BYK-331" manufactured by BYK Additives & Instruments as a leveling agent were each weighed and mixed at a NCO/OH molar ratio of 1.10. The mixture was stirred at 1000 rpm for 30 minutes using a stirrer and then defoamed using a vacuum defoamer to obtain a coating material composition. A coating film formed from the obtained coating material composition was evaluated (stain resistance and sunscreen resistance). The evaluation results are described in Table 2.

[Example 8]

15 g of the polycarbonate diol composition A-2 obtained in Synthesis Example 4 as a base agent, 3.15 g of "TPA-100 (trade name)" manufactured by Asahi Kasei Corp. as a curing agent, 29.93 g of butyl acetate as a solvent, 0.18 g of dibutyltin dilaurate diluted into 10% by mass with butyl acetate as a catalyst, 1.82 g of "ACEMATT TS 100 (trade name)" manufactured by Evonik Industries AG as a flatting agent, and 0.11 g of "BYK-331" manufactured by BYK Additives & Instruments as a leveling agent were each weighed and mixed at a NCO/OH molar ratio of 1.10. The mixture was stirred at 1000 rpm for 30 minutes using a stirrer and then defoamed using a vacuum defoamer to obtain a coating material composition. A coating film formed from the obtained coating material composition was evaluated (stain resistance and sunscreen resistance). The evaluation results are described in Table 2.

[Example 9]

15 g of the polycarbonate diol composition A-3 obtained in Synthesis Example 6 as a base agent, 5.82 g of "TPA-100 (trade name)" manufactured by Asahi Kasei Corp. (polyisocyanate; NCO content: 23.0%) as a curing agent, 34.33 g of butyl acetate as a solvent, 0.21 g of dibutyltin dilaurate diluted into 10% by mass with butyl acetate as a catalyst, 2.08 g of "ACEMATT TS 100 (trade name)" manufactured by Evonik Industries AG as a flatting agent, and 0.12 g of "BYK-331" manufactured by BYK Additives & Instruments as a leveling agent were each weighed and mixed at a NCO/OH molar ratio of 1.10. The mixture was stirred at 1000 rpm for 30 minutes using a stirrer and then defoamed using a vacuum defoamer to obtain a coating material composition. A coating film formed from the obtained coating material composition was evaluated (stain resistance and sunscreen resistance). The evaluation results are described in Table 2.

[Example 10]

15 g of the polycarbonate diol composition A-4 obtained in Synthesis Example 7 as a base agent, 2.85 g of "TPA-100 (trade name)" manufactured by Asahi Kasei Corp. as a curing agent, 29.43 g of butyl acetate as a solvent, 0.18 g of dibutyltin dilaurate diluted into 10% by mass with butyl acetate as a catalyst, 1.78 g of "ACEMATT TS 100 (trade name)" manufactured by Evonik Industries AG as a flatting agent, and 0.11 g of "BYK-331" manufactured by BYK Additives & Instruments as a leveling agent were each weighed and mixed at a NCO/OH molar ratio of 1.10. The mixture was stirred at 1000 rpm for 30 minutes using a stirrer and then defoamed using a vacuum defoamer to obtain a coating material composition. A coating film formed from the obtained coating material composition was evaluated (stain resistance and sunscreen resistance). The evaluation results are described in Table 2.

[Comparative Example 3]

15 g of the polycarbonate diol composition A-5 obtained in Synthesis Example 9 as a base agent, 5.89 g of "TPA-100 (trade name)" manufactured by Asahi Kasei Corp. as a curing agent, 34.45 g of butyl acetate as a solvent, 0.21 g of dibutyltin dilaurate diluted into 10% by mass with butyl acetate as a catalyst, 2.09 g of "ACEMATT TS 100 (trade name)" manufactured by Evonik Industries AG as a flatting agent, and 0.13 g of "BYK-331" manufactured by BYK Additives & Instruments as a leveling agent were each weighed and mixed at a NCO/OH molar ratio of 1.10. The mixture was stirred at 1000 rpm for 30 minutes using a stirrer and then defoamed using a vacuum defoamer to obtain a coating

material composition. A coating film formed from the obtained coating material composition was evaluated (stain resistance and sunscreen resistance). The evaluation results are described in Table 2.

[Comparative Example 4]

15 g of the polycarbonate diol composition A-6 obtained in Synthesis Example 11 as a base agent, 3.55 g of "TPA-100 (trade name)" manufactured by Asahi Kasei Corp. as a curing agent, 30.59 g of butyl acetate as a solvent, 0.19 g of dibutyltin dilaurate diluted into 10% by mass with butyl acetate as a catalyst, 1.86 g of "ACEMATT TS 100 (trade name)" manufactured by Evonik Industries AG as a flatting agent, and 0.11 g of "BYK-331" manufactured by BYK Additives & Instruments as a leveling agent were each weighed and mixed at a NCO/OH molar ratio of 1.10. The mixture was stirred at 1000 rpm for 30 minutes using a stirrer and then defoamed using a vacuum defoamer to obtain a coating material composition. A coating film formed from the obtained coating material composition was evaluated (stain resistance and sunscreen resistance). The evaluation results are described in Table 2.

[Example 11]

15 g of the polycarbonate diol composition A-7 obtained in Synthesis Example 13 as a base agent, 5.82 g of "TPA-100 (trade name)" manufactured by Asahi Kasei Corp. (polyisocyanate; NCO content: 23.0%) as a curing agent, 34.34 g of butyl acetate as a solvent, 0.21 g of dibutyltin dilaurate diluted into 10% by mass with butyl acetate as a catalyst, 2.08 g of "ACEMATT TS 100 (trade name)" manufactured by Evonik Industries AG as a flatting agent, and 0.12 g of "BYK-331" manufactured by BYK Additives & Instruments as a leveling agent were each weighed and mixed at a NCO/OH molar ratio of 1.10. The mixture was stirred at 1000 rpm for 30 minutes using a stirrer and then defoamed using a vacuum defoamer to obtain a coating material composition. A coating film formed from the obtained coating material composition was evaluated (stain resistance and sunscreen resistance). The evaluation results are described in Table 2.

[Example 12]

15 g of the polycarbonate diol composition A-8 obtained in Synthesis Example 15 as a base agent, 5.93 g of "TPA-100 (trade name)" manufactured by Asahi Kasei Corp. (polyisocyanate; NCO content: 23.0%) as a curing agent, 34.51 g of butyl acetate as a solvent, 0.21 g of dibutyltin dilaurate diluted into 10% by mass with butyl acetate as a catalyst, 2.09 g of "ACEMATT TS 100 (trade name)" manufactured by Evonik Industries AG as a flatting agent, and 0.12 g of "BYK-331" manufactured by BYK Additives & Instruments as a leveling agent were each weighed and mixed at a NCO/OH molar ratio of 1.10. The mixture was stirred at 1000 rpm for 30 minutes using a stirrer and then defoamed using a vacuum defoamer to obtain a coating material composition. A coating film formed from the obtained coating material composition was evaluated (stain resistance and sunscreen resistance). The evaluation results are described in Table 2.

<Preparation of clear coating material>

[Example 13]

20 g of "Setaqua 6515 (trade name)" manufactured by Nuplex Industries Ltd. (aqueous acrylic polyol; hydroxy value: 108.9 g-KOH/g-resin, solid content: 45% by mass) and 3.86 g of the polycarbonate diol composition A-3 obtained in Synthesis Example 6 as a base agent, 7.52 g of "WT31-100 (trade name)" manufactured by Asahi Kasei Corp. as a curing agent, 19.46 g of ion-exchange water as a solvent, and 0.10 g of "Borchers LH10 (trade name)" as an aqueous catalyst were each weighed and mixed such that the resin component mass ratio between "Setaqua 6515 (trade name)" and the polycarbonate diol composition A-3 obtained in Synthesis Example 6 was a mass ratio of 7/3 and the NCO/OH molar ratio was 1.25. The mixture was stirred at 600 rpm for 30 minutes using a stirrer and then defoamed using a vacuum defoamer to obtain a coating material composition. A coating film formed from the obtained coating material composition was evaluated for its solvent resistance. The evaluation results are described in Table 3.

[Comparative Example 5]

20 g of "Setaqua 6515 (trade name)" manufactured by Nuplex Industries Ltd. and 3.86 g of the polycarbonate diol composition A-5 obtained in Synthesis Example 9 as a base agent, 7.55 g of "WT31-100 (trade name)" manufactured by Asahi Kasei Corp. as a curing agent, 19.50 g of ion-exchange water as a solvent, and 0.10 g of "Borchers LH10 (trade name)" as an aqueous catalyst were each weighed and mixed such that the resin component mass ratio between

"Setaqua 6515 (trade name)" and the polycarbonate diol composition A-5 obtained in Synthesis Example 9 was a mass ratio of 7/3 and the NCO/OH molar ratio was 1.25. The mixture was stirred at 600 rpm for 30 minutes using a stirrer and then defoamed using a vacuum defoamer to obtain a coating material composition. A coating film formed from the obtained coating material composition was evaluated for its solvent resistance. The evaluation results are described in Table 3.

[Example 14]

20 g of "Setalux 1152 (trade name)" manufactured by Nuplex Industries Ltd. (acrylic polyol; hydroxy value: 138.6 g-KOH/g-resin, solid content: 61% by mass) and 5.23 g of the polycarbonate diol composition A-3 obtained in Synthesis Example 6 as a base agent, 8.57 g of "TKA-100 (trade name)" manufactured by Asahi Kasei Corp. (polyisocyanate; NCO content: 21.7%, solid content: 100%) as a curing agent, 31.06 g of butyl acetate as a solvent, and 0.13 g of dibutyltin dilaurate diluted into 10% by mass with butyl acetate as a catalyst were each weighed and mixed such that the resin component mass ratio between "Setalux 1152 (trade name)" and the polycarbonate diol composition A-3 obtained in Synthesis Example 6 was a mass ratio of 7/3 and the NCO/OH molar ratio was 1.10. The mixture was stirred at 600 rpm for 30 minutes using a stirrer and then defoamed using a vacuum defoamer to obtain a coating material composition. A coating film formed from the obtained coating material composition was evaluated for its solvent resistance. The evaluation results are described in Table 3.

[Comparative Example 6]

20 g of "Setalux 1152 (trade name)" manufactured by Nuplex Industries Ltd. and 5.23 g of the polycarbonate diol composition A-5 obtained in Synthesis Example 9 as a base agent, 8.59 g of "TKA-100 (trade name)" as a curing agent, 31.10 g of butyl acetate as a solvent, and 0.13 g of dibutyltin dilaurate diluted into 10% by mass with butyl acetate as a catalyst were each weighed and mixed such that the resin component mass ratio between "Setalux 1152 (trade name)" and the polycarbonate diol composition A-5 obtained in Synthesis Example 9 was a mass ratio of 7/3 and the NCO/OH molar ratio was 1.10. The mixture was stirred at 600 rpm for 30 minutes using a stirrer and then defoamed using a vacuum defoamer to obtain a coating material composition. A coating film formed from the obtained coating material composition was evaluated for its solvent resistance. The evaluation results are described in Table 3.

[Example 15]

20 g of "Setaqua 6515 (trade name)" manufactured by Nuplex Industries Ltd. (aqueous acrylic polyol; hydroxy value: 108.9 g-KOH/g-resin, solid content: 45% by mass) and 3.86 g of the polycarbonate diol composition A-7 obtained in Synthesis Example 13 as a base agent, 7.52 g of "WT31-100 (trade name)" manufactured by Asahi Kasei Corp. as a curing agent, 19.65 g of ion-exchange water as a solvent, and 0.10 g of "Borchers LH10 (trade name)" as an aqueous catalyst were each weighed and mixed such that the resin component mass ratio between "Setaqua 6515 (trade name)" and the polycarbonate diol composition A-7 obtained in Synthesis Example 13 was a mass ratio of 7/3 and the NCO/OH molar ratio was 1.25. The mixture was stirred at 600 rpm for 30 minutes using a stirrer and then defoamed using a vacuum defoamer to obtain a coating material composition. A coating film formed from the obtained coating material composition was evaluated for its solvent resistance. The evaluation results are described in Table 3.

[Example 16]

20 g of "Setalux 1152 (trade name)" manufactured by Nuplex Industries Ltd. (acrylic polyol; hydroxy value: 138.6 g-KOH/g-resin, solid content: 61% by mass) and 5.23 g of the polycarbonate diol composition A-8 obtained in Synthesis Example 15 as a base agent, 8.12 g of "TKA-100 (trade name)" manufactured by Asahi Kasei Corp. (polyisocyanate; NCO content: 21.7%, solid content: 100%) as a curing agent, 30.76 g of butyl acetate as a solvent, and 0.13 g of dibutyltin dilaurate diluted into 10% by mass with butyl acetate as a catalyst were each weighed and mixed such that the resin component mass ratio between "Setalux 1152 (trade name)" and the polycarbonate diol composition A-8 obtained in Synthesis Example 15 was a mass ratio of 7/3 and the NCO/OH molar ratio was 1.10. The mixture was stirred at 600 rpm for 30 minutes using a stirrer and then defoamed using a vacuum defoamer to obtain a coating material composition. A coating film formed from the obtained coating material composition was evaluated for its solvent resistance. The evaluation results are described in Table 3.

[Table 1]

| Evaluation item | Example 1 | Example 2 | Example 3 | Example 4 | Example 5 | Example 6 | Comparative Example 1 | Comparative Example 2 |
|---|---|---|---|---|---|---|---|---|
| Stain resistance (color difference ΔE) | ◎ | ◎ | ○ | ◎ | ○ | ○ | Δ | × |
| Sunscreen resistance | ○ | ○ | ○ | ○ | ○ | ○ | × | × |

[Table 2]

| Evaluation item | Example 7 | Example 8 | Example 9 | Example 10 | Example 11 | Example 12 | Comparative Example 3 | Comparative Example 4 |
|---|---|---|---|---|---|---|---|---|
| Stain resistance (color difference ΔE) | ◎ | ◎ | ○ | ◎ | ○ | ○ | × | × |
| Sunscreen resistance | ○ | ○ | ○ | ○ | ○ | ○ | × | × |

[Table 3]

| Evaluation item | | Example 13 | Example 14 | Example 15 | Example 16 | Comparative Example 5 | Comparative Example 6 |
|---|---|---|---|---|---|---|---|
| Solvent resistance | Xylene | ○ | ○ | ○ | ○ | × | × |
| | Ethanol | ○ | ○ | ○ | ○ | × | × |
| | Oleic acid | ○ | ○ | ○ | ○ | Δ | Δ |

From these results, the coating material compositions comprising the polycarbonate diol compositions of the present Examples were confirmed to be excellent in stain resistance and chemical resistance.

The coating material composition comprising the polycarbonate diol composition of the present embodiment can be suitably used in a wide range of fields, for example, as a coating material for automobiles, buses, rail vehicles, building site equipment, agricultural machines, floors, walls or roofs of architectures, metal products, mortar or concrete products, wood products, plastic products, and ceramics construction materials such as calcium silicate boards or plaster boards.

## Claims

1. A polycarbonate diol composition comprising a polyoxyethylene structure represented by (formula 1) and a polycarbonate structure represented by (formula 2), the polycarbonate diol composition having hydroxy groups at both ends and having a number-average molecular weight, determined from a hydroxy value as described in "(Measurement of hydroxy value)" in the description, of 300 or larger and 10000 or smaller, wherein
the polycarbonate diol composition comprises 5% by mass or more and 50% by mass or less of the polyoxyethylene structure and 50% by mass or more and 95% by mass or less of the polycarbonate structure based on a total mass of the polyoxyethylene structure and the polycarbonate structure, and
among dihydroxy compounds obtained by a hydrolysis of the polycarbonate diol composition, a dihydroxy compound except for a dihydroxy compound having a polyoxyethylene structure comprises at least one kind of compound selected from the group consisting of dihydroxy compounds represented by (formula 3):

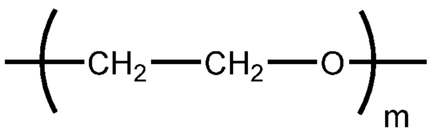

... (Formula 1)

wherein m is a number of 3 or larger and 70 or smaller,

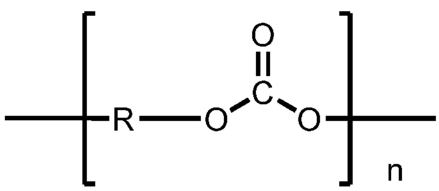

... (Formula 2)

wherein R is a divalent linear, branched or cyclic aliphatic, or aromatic hydrocarbon group having 2 or more and 15 or less carbon atoms, and a plurality of R moieties are the same as or different from each other; and n is a number of 1 or larger and 50 or smaller, and

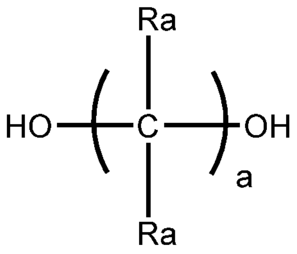

... (Formula 3)

wherein Ra is a hydrogen group, or an aliphatic hydrocarbon group having 1 to 5 carbon atoms, and Ra moieties are the same or different; and a is a number of 2 or larger and 4 or smaller.

2. The polycarbonate diol composition according to claim 1, wherein, among the dihydroxy compounds obtained by the hydrolysis of the polycarbonate diol composition, the dihydroxy compound except for the dihydroxy compound having the polyoxyethylene structure comprises 10% by mol or more of the dihydroxy compound represented by (formula 3) .

3. The polycarbonate diol composition according to claim 1, wherein, among the dihydroxy compounds obtained by the hydrolysis of the polycarbonate diol composition, the dihydroxy compound except for the dihydroxy compound having the polyoxyethylene structure comprises 30% by mol or more of the dihydroxy compound represented by (formula 3) .

4. The polycarbonate diol composition according to claim 1, wherein, among the dihydroxy compounds obtained by the hydrolysis of the polycarbonate diol composition, the dihydroxy compound except for the dihydroxy compound having the polyoxyethylene structure comprises 50% by mol or more of the dihydroxy compound represented by (formula 3) .

5. The polycarbonate diol composition according to any one of claims 1 to 4, wherein the structure of (formula 3) is represented by the following (formula 3-1):

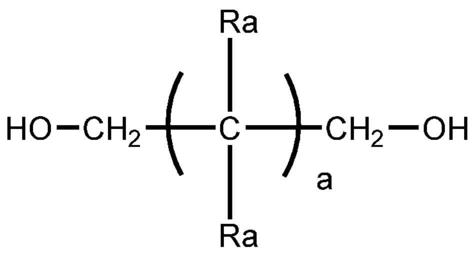

(Formula 3-1)

wherein Ra is a hydrogen group, or an aliphatic hydrocarbon group having 1 to 5 carbon atoms, and Ra moieties are the same or different; and a is a number of 0 or larger and 2 or smaller.

6. The polycarbonate diol composition according to any one of claims 1 to 5, wherein, among the dihydroxy compounds obtained by the hydrolysis of the polycarbonate diol composition, the dihydroxy compound except for the dihydroxy compound having the polyoxyethylene structure has an average number of carbon atoms of 2 or more and less than 5.5.

7. The polycarbonate diol composition according to any one of claims 1 to 6, wherein the polycarbonate diol composition comprises 5 to 30% by mass of the polyoxyethylene structure represented by (formula 1) and 70 to 95% by mass of the polycarbonate structure represented by (formula 2).

8. A coating material composition comprising the polycarbonate diol composition according to any one of claims 1 to 7.

9. An ink composition comprising the polycarbonate diol composition according to any one of claims 1 to 7.

10. A viscous adhesive composition comprising the polycarbonate diol composition according to any one of claims 1 to 7.

**Patentansprüche**

1. Polycarbonatdiolzusammensetzung, umfassend eine durch (Formel 1) dargestellte Polyoxyethylenstruktur und eine durch (Formul 2) dargestellte Polycarbonatstruktur, wobei die Polycarbonatdiolzusammensetzung Hydroxylgruppen an beiden Enden aufweist und ein Zahlenmittel des Molekulargewichts, das aus einer Hydroxylzahl wie in "(Measurement of hydroxy value)" in der Beschreibung beschrieben bestimmt wurde, von 300 oder größer und 10000 oder kleiner aufweist, wobei
die Polycarbonatdiolzusammensetzung 5 Massen-% oder mehr und 50 Massen-% oder weniger der Polyoxyethylenstruktur und 50 Massen-% oder mehr und 95 Massen-% oder weniger der Polycarbonatstruktur umfasst, bezogen auf die Gesamtmasse der Polyoxyethylenstruktur und der Polycarbonatstruktur, und
unter Dihydroxyverbindungen, die durch Hydrolyse der Polycarbonatdiolzusammensetzung erhalten wurden, eine Dihydroxyverbindung, ausgenommen eine Dihydroxyverbindung mit einer Polyoxyethylenstruktur, mindestens eine Art von Verbindung umfasst, die aus der Gruppe ausgewählt ist, bestehend aus durch die (Formel 3) dargestellten Dihydroxyverbindungen:

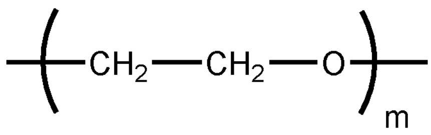
... (Formel 1)

worin m eine Zahl von 3 oder größer und 70 oder kleiner ist,

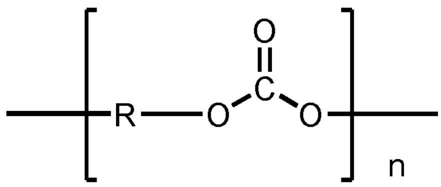
... (Formel 2)

worin R eine zweiwertige lineare, verzweigte oder cyclische aliphatische Gruppe oder eine aromatische Kohlenwasserstoffgruppe mit 2 oder mehr und 15 oder weniger Kohlenstoffatomen ist, und eine Mehrzahl/Vielzahl von R-Resten gleich zueinander oder verschieden voneinander sind; und n eine Zahl von 1 oder größer und 50 oder kleiner ist, und

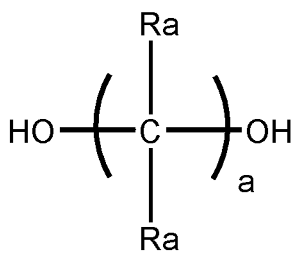
... (Formel 3)

worin Ra eine Wasserstoffgruppe oder eine aliphatische Kohlenwasserstoffgruppe mit 1 bis 5 Kohlenstoffatomen ist, wobei Ra-Reste gleich oder verschieden sind; und a eine Zahl von 2 oder größer und 4 oder kleiner ist.

2. Polycarbonatdiolzusammensetzung nach Anspruch 1, wobei unter den durch Hydrolyse der Polycarbonatdiolzusammensetzung erhaltenen Dihydroxyverbindungen die Dihydroxyverbindung, ausgenommen die Dihydroxyverbindung mit der Polyoxyethylenstruktur, 10 Mol-% oder mehr der Dihydroxyverbindung der (Formel 3) umfasst.

3. Polycarbonatdiolzusammensetzung nach Anspruch 1, wobei unter den durch Hydrolyse der Polycarbonatdiolzusammensetzung erhaltenen Dihydroxyverbindungen die Dihydroxyverbindung, ausgenommen die Dihydroxyverbindung mit der Polyoxyethylenstruktur, 30 Mol-% oder mehr der Dihydroxyverbindung der (Formel 3) umfasst.

4. Polycarbonatdiolzusammensetzung nach Anspruch 1, wobei unter den durch Hydrolyse der Polycarbonatdiolzusammensetzung erhaltenen Dihydroxyverbindungen die Dihydroxyverbindung, ausgenommen die Dihydroxyverbindung mit der Polyoxyethylenstruktur, 50 Mol-% oder mehr der Dihydroxyverbindung der (Formel 3) umfasst.

5. Polycarbonatdiolzusammensetzung nach einem der Ansprüche 1 bis 4, wobei die Struktur der (Formel 3) durch die folgende (Formel 3-1) dargestellt wird:

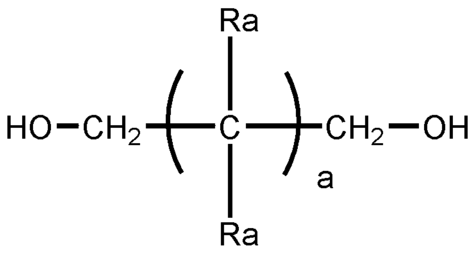

(Formel 3-1)

wobei Ra eine Wasserstoffgruppe oder eine aliphatische Kohlenwasserstoffgruppe mit 1 bis 5 Kohlenstoffatomen ist, wobei Ra-Reste gleich oder verschieden sind; und a eine Zahl von 0 oder größer und 2 oder kleiner ist.

6. Polycarbonatdiolzusammensetzung nach einem der Ansprüche 1 bis 5, wobei unter den durch Hydrolyse der Polycarbonatdiolzusammensetzung erhaltenen Dihydroxyverbindungen die Dihydroxyverbindung, ausgenommen die Dihydroxyverbindung mit der Polyoxyethylenstruktur, eine durchschnittliche Zahl von Kohlenstoffatomen von 2 oder mehr und weniger als 5,5 aufweist.

7. Polycarbonatdiolzusammensetzung nach einem der Ansprüche 1 bis 6, wobei die Polycarbonatdiolzusammensetzung 5 bis 30 Massen-% der durch (Formel 1) dargestellten Polyoxyethylenstruktur und 70 bis 95 Massen-% der der durch (Formel 2) dargestellten Polycarbonatstruktur umfasst.

8. Beschichtungsmaterialzusammensetzung, welche die Polycarbonatdiolzusammensetzung nach einem der Ansprüche 1 bis 7 umfasst.

9. Druckfarbenzusammensetzung bzw. Tintenzusammensetzung, welche die Polycarbonatdiolzuammensetzung nach einem der Ansprüche 1 bis 7 umfasst.

10. Viskose Klebstoffzusammensetzung, welche die Polycarbonatdiolzuammensetzung nach einem der Ansprüche 1 bis 7 umfasst.

**Revendications**

1. Composition de polycarbonate diol comprenant une structure polyoxyéthylène représentée par (formule 1) et une structure polycarbonate représentée par (formule 2), la composition de polycarbonate diol comportant des groupes hydroxy au niveau des deux extrémités et ayant un poids moléculaire moyen en nombre, déterminé à partir d'un indice hydroxy tel que décrit dans « (Mesure de l'indice hydroxy) » dans la description, de 300 ou plus et de 10 000 ou moins, dans laquelle
la composition de polycarbonate diol comprend 5 % en masse ou plus et 50 % en masse ou moins de la structure polyoxyéthylène et 50 % en masse ou plus et 95 % en masse ou moins de la structure polycarbonate sur la base d'une masse totale de la structure polyoxyéthylène et de la structure polycarbonate, et
parmi les composés dihydroxy obtenus par une hydrolyse de la composition de polycarbonate diol, un composé dihydroxy à l'exception d'un composé dihydroxy ayant une structure polyoxyéthylène comprend au moins un type de composé choisi dans le groupe constitué des composés dihydroxy représentés par (formule 3) :

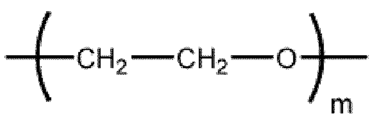

... (Formule 1)

dans laquelle m est un nombre de 3 ou plus et de 70 ou moins,

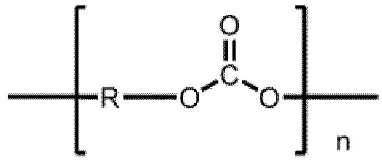

... (Formule 2)

dans laquelle R est un groupe hydrocarboné divalent linéaire, ramifié ou aliphatique cyclique ou aromatique, comportant 2 ou plus et 15 ou moins atomes de carbone, et une pluralité de groupements R sont identiques les uns aux autres ou différents les uns des autres ; et n est un nombre de 1 ou plus et de 50 ou moins, et

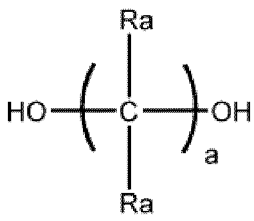

... (Formule 3)

dans laquelle Ra est un groupe hydrogéno, ou un groupe hydrocarboné aliphatique comportant de 1 à 5 atomes de carbone, et les groupements Ra sont identiques ou différents ; et a est un nombre de 2 ou plus et de 4 ou moins.

**2.** Composition de polycarbonate diol selon la revendication 1, dans laquelle, parmi les composés dihydroxy obtenus par l'hydrolyse de la composition de polycarbonate diol, le composé dihydroxy à l'exception du composé dihydroxy ayant la structure polyoxyéthylène comprend 10 % en mol ou plus du composé dihydroxy représenté par (formule 3).

**3.** Composition de polycarbonate diol selon la revendication 1, dans laquelle, parmi les composés dihydroxy obtenus par l'hydrolyse de la composition de polycarbonate diol, le composé dihydroxy à l'exception du composé dihydroxy ayant la structure polyoxyéthylène comprend 30 % en mol ou plus du composé dihydroxy représenté par (formule 3).

**4.** Composition de polycarbonate diol selon la revendication 1, dans laquelle, parmi les composés dihydroxy obtenus par l'hydrolyse de la composition de polycarbonate diol, le composé dihydroxy à l'exception du composé dihydroxy ayant la structure polyoxyéthylène comprend 50 % en mol ou plus du composé dihydroxy représenté par (formule 3).

**5.** Composition de polycarbonate diol selon l'une quelconque des revendications 1 à 4, dans laquelle la structure de (formule 3) est représentée par la (formule 3-1) suivante :

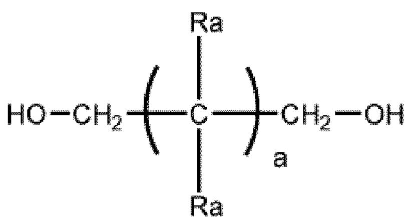

(Formule 3-1)

dans laquelle Ra est un groupe hydrogéno, ou un groupe hydrocarboné aliphatique comportant de 1 à 5 atomes de carbone, et les groupements Ra sont identiques ou différents ; et a est un nombre de 0 ou plus et de 2 ou moins.

**6.** Composition de polycarbonate diol selon l'une quelconque des revendications 1 à 5, dans laquelle, parmi les composés dihydroxy obtenus par l'hydrolyse de la composition de polycarbonate diol, le composé dihydroxy à l'exception du composé dihydroxy ayant la structure polyoxyéthylène a un nombre moyen d'atomes de carbone de 2 ou plus et de moins de 5,5.

**7.** Composition de polycarbonate diol selon l'une quelconque des revendications 1 à 6, dans laquelle la composition

de polycarbonate diol comprend de 5 à 30 % en masse de la structure polyoxyéthylène représentée par (formule 1) et de 70 à 95 % en masse de la structure polycarbonate représentée par (formule 2).

**8.** Composition de matériau de revêtement comprenant la composition de polycarbonate diol selon l'une quelconque des revendications 1 à 7.

**9.** Composition d'encre comprenant la composition de polycarbonate diol selon l'une quelconque des revendications 1 à 7.

**10.** Composition adhésive visqueuse comprenant la composition de polycarbonate diol selon l'une quelconque des revendications 1 à 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2289616 A
- JP 2006124486 A
- EP 3141574 A1
- JP 3874664 B
- JP 57034107 A
- JP 61275311 A